(19) Europäisches Patentamt
European Patent Office
Office européen des brevets

(11) Publication number: **0 079 635**
**B1**

# (12) EUROPEAN PATENT SPECIFICATION

(45) Date of publication of patent specification: **21.05.86**

(51) Int. Cl.[4]: **C 07 F 9/38,** C 07 F 9/40, C 07 F 9/58, A 01 N 57/22, A 01 N 57/24

(21) Application number: **82201359.5**

(22) Date of filing: **29.10.82**

## (54) Arylphenyl ethers having herbicidal activity.

(30) Priority: **18.11.81 NL 8105220**

(43) Date of publication of application:
**25.05.83 Bulletin 83/21**

(45) Publication of the grant of the patent:
**21.05.86 Bulletin 86/21**

(84) Designated Contracting States:
**AT BE CH DE FR GB IT LI LU NL SE**

(56) References cited:
**EP-A-0 014 684**
**EP-A-0 093 081**
**US-A-4 039 588**

(73) Proprietor: **DUPHAR INTERNATIONAL RESEARCH B.V**
**C.J. van Houtenlaan 36**
**NL-1381 CP Weesp (NL)**

(72) Inventor: **Paerels, Gerard Bernard**
**c/o OCTROOIBUREAU ZOAN B.V.**
**Apollolaan 151**
**NL-1077 AR Amsterdam (NL)**
Inventor: **Raven, Cornelis Wouter**
**c/o OCTROOIBUREAU ZOAN B.V.**
**Apollolaan 151**
**NL-1077 AR Amsterdam (NL)**

(74) Representative: **Swaters, Pieter D. et al**
**OCTROOIBUREAU ZOAN B.V. P.O. Box 140**
**NL-1380 AC Weesp (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to new arylphenyl ethers and to a method of preparing the new compounds. The invention also relates to herbicidal compositions and to compositions for leaf-desiccation on the basis of the new compounds. The invention further relates to the use of these compositions for controlling undesired plants and for leaf-dessiccation in agricultural and horticultural crop.

It is known that diphenyl ethers with a certain substitution pattern are suitable to control weeds in agricultural and horticultural crops. This control of weeds may take place after or before the emergence of weeds; agents whose object it is to control the weed after the emergence thereof are termed post-emergence herbicides, the other ones are termed pre-emergence herbicides. For an unhindered growth of the crop during the whole growing period, both types of herbicides are used, if desired, but one single application is preferred, however, which when a pre-emergence herbicide is used, usually is carried out simultaneously with or immediately after the sowing of the crop and, when a post-emergence herbicide is used, usually is carried out before the emerged weed starts hindering the growth of the crop. The advantage of the use of pre-emergence herbicides is that they can be provided in the soil destined for the crop simultaneously with the sowing of the crop; this is labour-saving, while damage to the standing crops upon application in a later stage is avoided. On the other hand, post-emergence herbicides are often more effectively active and can hence be used in smaller quantities to effectively control the weed.

It stands to reason that the selectivity of the herbicide used is of the utmost importance. As a matter of fact, the undesired plants must be controlled, i.e. the growth of undesired plants must be suppressed, while the growth of the crop may not be detrimentally influenced by the herbicide used. An ideal herbicide must control the weed in the crop during the whole growing season after one single application in a small dosage. The herbicide should be capable not only of controlling all types of weeds, but also killing both the seedlings and full-grown plants of these weeds, as well as preventing the germination of the weed seeds. Nevertheless, the herbicide may not be phytotoxic with respect to the crops on which it is provided. Of course, none of the herbicides now in use is ideal. An effective weed control is usually associated with too large a phytotoxicity with respect to the crop, while a herbicide which has not detrimental influence whatsoever on the crop in a given dosage, does usually not control all weeds effectively in the same dosage.

Diphenyl ethers having herbicidal properties are known from United States Specification 4,039,588. As examples of these compounds are mentioned p-nitrodiphenyl ethers which in the ortho position with respect to the nitro group bear an amino substituent, for example, 2,4-dichloro-3'-isopropylamino-4'-nitrodiphenyl ether. As will become apparent from the examples, however, the activity of this herbicidal compound leaves much to be desired.

It is the object of the invention to provide herbicides which can selectively control undesired plants in agricultural and horticultural crops and simultaneously have an improved activity as compared with the above-mentioned known compound. This object can be achieved by new arylphenyl ethers of the general formula

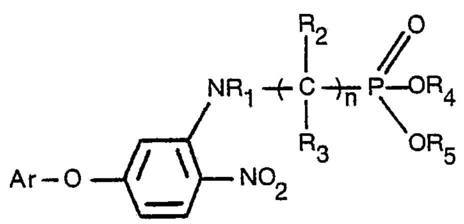

(I)

wherein

Ar is a phenyl or pyridyl group, which groups are substituted with 1,2 or 3 substituents, selected from a halogen atom, a cyano group, a nitro group, an optionally halogenated alkyl, alkoxy and alkylthio group having 1—6 carbon atoms, an alkylsulphonyl group having 1—4 carbon atoms, and an alkanoyl group having 1—4 carbon atoms;

n is 1 or 2;

$R_1$ and $R_2$, which are the same or different, represent hydrogen atoms or alkyl groups having 1—4 carbon atoms;

$R_3$ is a hydrogen atom, an alkyl group having 1—4 carbon atoms optionally substituted with an alkoxycarbonyl group with 2—5 carbon atoms, or an alkenyl group having 2—4 carbon atoms; or

$R_2$ and $R_3$ together form an alkylene group with 2—5 carbon atoms; and

$R_4$ and $R_5$, which are the same or different, represent alkyl groups having 1—6 carbon atoms; or

$R_4$ and $R_5$ together form an alkylene group having 2 or 3 carbon atoms.

European patent application 93081, the priority application of which was filed before the filing date of the present application, comprises as its subject matter related arylphenyl ethers and their use in herbicidal compositions. Consequently arylphenyl ethers of the above formula I, in which, if n is 2 or $R_1$ is $C_1$—$C_4$ alkyl, Ar represents a phenyl or pyridyl group substituted with 1—3 substituents, selected from halogen, cyano, nitro and trifluoromethyl, are disclaimed in the commonly designated contracting states.

Particularly suitable have proved new compound of the general formula

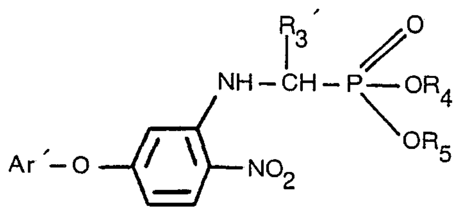

(II)

wherein

Ar' is a phenyl group, substituted in the 2,4- or 2,4,6-positions with substituents selected from a halogen atom, a nitro group and a trifluoromethyl group, with the proviso that not more than one of the substituents represents a nitro group or a trifluoromethyl group,

$R_3$' is an alkyl group having 1 or 2 carbon atoms, or a vinyl group, and

$R_4$ and $R_5$ have the above meanings.

Dimethyl and diethyl esters of 1-[N-{2-nitro-5-(2,4-dichlorophenoxy)phenyl}amino]ethane phosphonic acid and of 1-[N-{2-nitro-5-(2-chloro-4-trifluoromethylphenoxy)phenyl}amino]ethane phosphonic acid have proved to be excellently suitable for use as active substances in compositions having selective herbicidal activity, such as dimethyl 1-[N-{2-nitro-5-(2,4-dichlorophenoxy)phenyl}amino]ethane phosphonate (1), diethyl 1-[N-{2-nitro-5-(2-chloro-4-trifluoromethylphenoxy)phenyl}amino]-ethane phosphonate (2), dimethyl 1-[N-{2-nitro-5-(2-chloro-4-trifluoromethylphenoxy)phenyl}amino]ethane phosphonate (3), and diethyl 1-[N-{2-nitro-5-(2,4-dichlorophenoxy)phenyl}amino]ethane phosphonate (4).

Other examples of new diphenyl ethers according to the invention which may be used as selective herbicides, are:

(5) diethyl 1-[N-{2-nitro-5-(2,4,6-trichlorophenoxy)phenyl}amino]ethane phosphonate;
(6) dibutyl 1-[N-{2-nitro-5-(2,4,6-trichlorophenoxy)phenyl}amino]ethane phosphonate;
(7) dimethyl 1-[N-{2-nitro-5-(4-methylphenoxy)phenyl}amino]ethane phosphonate;
(8) dimethyl 1-[N-{2-nitro-5-(4-trifluoromethylphenoxy)phenyl}amino]ethane phosphonate;
(9) dimethyl 1-[N-{2-nitro-5-(4-cyanophenoxy)phenyl}amino]ethane phosphonate;
(10) dimethyl 1-[N-{2-nitro-5-(4-n-propylphenoxy)phenyl}amino]ethane phosphonate;
(11) dimethyl 1-[N-{2-nitro-5-(4-tert.-butylphenoxy)phenyl}amino]ethane phosphonate;
(12) dimethyl 1-[N-{2-nitro-5-(2-methyl-4-chlorophenoxy)phenyl}amino]ethane phosphonate;
(13) diethyl 2-[N-{2-nitro-5-(2-chloro-4-trifluoromethylphenoxy)phenyl}amino]ethane phosphonate;
(14) dimethyl 1-[N-{2-nitro-5-(2,6-dichloro-4-trifluoromethylphenoxy)phenyl}amino]ethane phosphonate;
(15) dimethyl 1-[N-{2-nitro-5-(4-bromophenoxy)phenyl}amino]ethane phosphonate;
(16) dimethyl 1-[N-{2-nitro-5-(2,4-dibromophenoxy)phenyl}amino]ethane phosphonate;
(17) diethyl 1-[N-{2-nitro-5-(2,4-dibromophenoxy)phenyl}amino]ethane phosphonate;
(18) dimethyl 1-[N-{2-nitro 5-(4-chlorophenoxy)phenyl}amino]ethane phosphonate;
(19) diethyl 1-methyl-1-[N-{2-nitro-5-(2,4-dichlorophenoxy)phenyl}amino]ethane phosphonate;
(20) diethyl 1-[N-{2-nitro-5-(2,4-dichlorophenoxy)phenyl}amino]-2-butene phosphonate;
(21) diethyl N-[2-nitro-5-(2,4-dichlorophenoxy)phenyl]aminomethane phosphonate;
(22) dimethyl 1-methyl-1-[N-{2-nitro-5-(2,4-dichlorophenoxy)phenyl}amino]propane phosphonate;
(23) dimethyl 1-ethoxycarbonylmethyl-1-[N-{2-nitro-5-(2,4-dichlorophenoxy)phenyl}amino]ethane phosphonate;
(24) diisopropyl 1-[N-{2-nitro-5-(2,4-dichlorophenoxy)phenyl}amino]ethane phosphonate;
(25) dimethyl 1-[N-{2-nitro-5-(2,4-dichlorophenoxy)phenyl}amino]propane phosphonate;
(26) dipropyl 1-[N-{2-nitro-5-(2,4-dichlorophenoxy)phenyl}amino]ethane phosphonate;
(27) dimethyl 1-[N-{2-nitro-5-(2,4,6-trichlorophenoxy)phenyl}amino]ethane phosphonate;
(28) dimethyl 1-[N-{2-nitro-5-(2,4-dichloro-5-methoxyphenoxy)phenyl}amino]ethane phosphonate;
(29) dimethyl 1-[N-{2-nitro-5-(4-methylthiophenoxy)phenyl}amino]ethane phosphonate;
(30) dimethyl 1-[N-{1-nitro-5-(4-methylsulphonylphenoxy)phenyl}amino]ethane phosphonate;
(31) dimethyl 1-[N-{2-nitro-5-(2-nitro-4-trifluoromethylphenoxy)phenyl}amino]ethane phosphonate;
(32) diethyl 1-[N-{2-nitro-5-(2-nitro-4-trifluoromethylphenoxy)phenyl}amino]ethane phosphonate;
(33) dimethyl 1-[N-(2-nitro-5-(2-trifluoromethyl-4-nitrophenoxy)phenyl}amino]ethane phosphonate;
(34) dimethyl 1-[N-{2-nitro-5-(2-chloro-4-nitrophenoxy)phenyl}amino]ethane phosphonate;
(35) dimethyl 1-[N-{2-nitro-5-(5-chloro-2-pyridyloxy)phenyl}amino]ethane phosphonate;
(36) dimethyl 1-[N-{2-nitro-5-(3,5-dichloro-2-pyridyloxy)phenyl}amino]ethane phosphonate;
(37) dimethyl 1-[N-{2-nitro-5-(2-chlorophenoxy)phenyl}amino]ethane phosphonate;
(38) dimethyl 1 [N-{2-nitro-5-(2-chloro-4-acetylphenoxy)phenyl}amino]ethane phosphonate;
(39) dimethyl 1-[N-{-nitro-5-(2-nitro-4-chlorophenoxy)phenyl}amino]ethane phosphonate;
(40) dimethyl 1-[N-{2-nitro-5-(4-trifluoromethoxyphenoxy)phenyl}amino]ethane phosphonate;
(41) dimethyl 1-[N-{2-nitro-5-(2-chloro-4-(1,1,2,2-tetraflurorethoxy)phenoxy)phenyl}amino]ethane phosphonate;
(42) dimethyl 1-[N-{2-nitro-5-(2-chloro-4-methylthiophenoxy)phenyl}amino]ethane phosphonate;
(43) dimethyl 1-methyl-1-[N-{2-nitro-5-(2,4-dibromophenoxy)phenyl}amino]ethane phosphonate;

(44) diethyl 1-[-{2-nitro-5-(4-chlorophenoxy)phenyl}amino]ethane phosphonate;
(45) dimethyl 1-[N-{2-nitro-5-(2,6-dichloro-4-nitrophenoxy)phenyl}amino]ethane phosphonate; and
(46) dimethyl 1-[N-{2-nitro-5-(3-chloro-4-methoxyphenoxy)phenyl}amino]ethane phosphonate.

The substance according to the invention may be used for the control of undesired plants in agricultural and horticultural crops. Although the new arylphenyl ethers have an interesting pre-emergence herbicidal activity, what is most striking is their activity as post-emergence herbicides. Therefore, the compounds according to the invention may be used as post- and pre-emergence herbicides. The new arylphenyl ethers may be used for the control of monocotyle and in particular dicotyle weeds, for example, *Galinsoga parviflora* (small-flowered g.) *Galium aparine* (cleavers), *Chenopodium album* (common lambsquarters), *Polygonum convolvulus* (wild buckwheat), *Capsella bursa-pastoris* (sheperd's purse), *Stellaria media* (chickweed), *Senecio vulgaris* (common groundsel), *Veronica arvensis* (corn speedwell), *Matricaria maritima* (chamomile), *Amaranthus retroflexus* (redroot pigweed), *Solanum nigrum* (black nightshade), *Spergula arvensis* (corn spurrey), *Urtica dioica* (stinging nettle), *Polygonum aviculare* (knowgrass), *Silybum marianum* (milk thistle), *Xanthium pensylvanicum, Datura stramonium, Ipomoea muricata, Ipomoea hederacea, Ipomoea lucunosa, Cassia obtusifolia, Sida spinosa, Anoda cristata, Abutilon theophrasti* and *Portulaca oleracea* in various crops, such as in cereals, for example, wheat, rice, maize, oats and barley, in leguminosae, for example, bean, pea, soya, peanut and lucerne, and in pasture-land.

As a special aspect of the invention it has been found that the new substances according to the invention can be used successfully in compositions for leaf-desiccation.

Desiccation or defoliation of a crop prior to harvest may have several advantages. In seed crops it hastens maturity of the seeds by which harvest can be carried out earlier allowing double cropping of the area or preventing harvest under unfavourable conditions e.g. frost, rain, etc. Mechanical harvest is made much more efficient by desiccating or defoliating the crop prior to harvest. Furthermore it can be a great help in preventing infection of the product harvested by diseases present on the vegetative plant parts. Desiccation or defoliating a crop before harvest therefore may have marked effects on crop yield and quality.

In potatoes as much as possible of the above ground plant part is elininated by dessiccation in order to prevent infection of the potato tubers by diseases present on the vegetative plant parts and in order to facilitate mechanical harvesting. Mechanical harvest in cotton requires the complete removal or drying of the leaves for satisfactory results. Desiccation or defoliation furthermore accelerates drying and opening of the green cotton bolls without a deleterious effect on bolls already open.

For practical use, the substances according to the invention are made into compositions. In such compositions the active substance is mixed with solid carrier material, if desired in combination with auxiliary substances, for example, emulsifiers, wetting agents, dispersing agents and stabilizers.

Examples of compositions according to the invention are aqueous solutions and dispersions, oily solutions and oily dispersions, solutions in organic solvents, pastes, dusting powders, dispersible powders, miscible oils, granules, pellets and aerosol compositions.

Dispersible powders, pastes and miscible oils are compositions in concentrated form which are diluted prior to or during use.

The solutions in organic solvents are mainly used in air application, namely when large areas are treated with a comparatively small quantity of composition. The solution of the active substance in organic solvents may be provided with a phytotoxicity-reducing substance, for example, wool fat, wool fatty acid or wool fatty alcohol.

A few forms of composition will be described in greater detail hereinafter by way of example.

Granular compositions are prepared by taking up, for example, the active substance in a solvent or dispersing it in a diluent and impregnating the resulting solution/suspension, if desired in the presence of a binder, on granular carrier material, for example porous granules (for example pumice and attaclay), mineral non-porous granules (sand or ground marlow), organic granules (for example, dried coffee grounds, cut tobaccostems or ground corncobs). A granular composition can also be prepared by compressing the active substance together with powdered minerals in the presence of lubricants and binders and disintegrating the compressed product to the desired grain size and sieving it. Granular compositions can be prepared in a different manner by mixing the active substance in powder form with powdered fillers, and glomulating the mixture then to the desired particle size.

Dusting powders can be obtained by intimately mixing the active substance with an inert solid powdered carrier material, for example, talcum.

Dispersible powders are prepared by mixing 10 to 80 parts by weight of a solid inert carrier, for example kaolin, dolomite, gypsum, chalk, bentonite, attapulgite, colloidal $SiO_1$ or mixtures of these and similar substances, with 10 to 80 parts by weight of the active substance, 1 to 5 parts by weight of a dispersing agent, for example the lignin sulphonates of alkylnaphthalene sulphonates known for this purpose, preferably also 0.5 to 5 parts by weight of a wetting agent, for example, fatty alcohol sulphates, alkyl aryl sulphonates, fatty acid condensation products, or polyoxyethylene compounds, and finally, if desired, other additives.

For the preparation of miscible oils the active compound is dissolved in a suitable solvent which preferably is poorly water-miscible, and one or more emulsifiers are added to this solution. Suitable

solvents are, for example, xylene, toluene, petroleum distillates which are rich in aromates, for example, solvent naphtha, distilled tar oil and mixtures of these liquids. As emulsifiers may be used, for example, polyoxyethylene compounds and/or alkyl aryl sulphonates. The concentration of the active compound in these miscible oils is not restricted to narrow limits and may vary, for example, between 2 and 50% by weight.

In addition to a miscible oil may also be mentioned as a liquid and highly concentrated primary composition a solution of the active substance in a readily water-miscible liquid, for example, a glycol, a glycol ether, dimethylformamide, or N-methylpyrrolidone, to which solution a dispersing agent and, if desired, a surface-active substance has been added. When diluting with water shortly before or during spraying, an aqueous dispersion of the active substance is then obtained.

An aerosol composition according to the invention is obtained in the usual manner by incorporating the active substance, if desired in a solvent, in a volatile liquid to be used as a propellant, for example, a mixture of chlorine-fluorine derivatives of methane and ethane, a mixture of lower hydrocarbons, dimethyl ether, or gases such as carbon dioxide, nitrogen and nitrous oxide.

In addition to the above-mentioned ingredients, the agents according to the invention may also contain other substances known for use in this type of agents. For example, a lubricant, for example, calcium stearate or magnesium stearate, may be added to a dispersible powder or a mixture to be granulated. "Adhesives", for example, polyvinylalcohol, cellulose derivatives or other colloidal materials, such as casein, may also be added so at to improve the adhesion of the pesticide to the crop. Furthermore, a substance may be added to reduce the phytotoxicity of the active substance, carrier material or auxiliary substance, for example, wool fat or wool fatty alcohol.

Growth regulating and pesticidal compounds known *per se* may also be incorporated in the compositions according to the invention. As a result of this the activity spectrum of the composition is widened and synergism may occur. In addition foliar fertilizers may be present.

For use in such a combination composition are to be considered, in addition to insecticidal and acaricidal compounds known *per se,* the following known growth regulating and fungicidal compounds:

*Growth regulators for example:*

1. higher alcohols, for example, octanol and decanol;
2. lower esters of fatty acids;
3. ethylene-generators, for example, (2-chloroethyl)phosphonic acid and 2-chloroethyl-tris(2-methoxy-ethoxy) silane;
4. nitrodiphenyl ethers;
5. substituted dinitroanilines, for example, 2-chloro-N-ethyl-6-fluoro-N-[2,6-dinitro-4-(trifluoromethyl)-phenyl]benzenemethaneamine;
6. trifluoromethylsulphonylamino compounds;
7. piperidine derivatives;
8. benzylthiocarbamates, for example, benzyl N,N'-dipropylthiocarbamate;
9. phosphorothionoamidates and amidothionophosphonic acid esters;
10. benzoxazoles;

and furthermore: maleic hydrazide; 2,3:4,6-di-O-isopropylidene-α-xylo-2-hexulo-furanosonic acid-sodium; N,N-dimethylaminosuccinic acid; α-cyclopropyl-4-methoxy-α pyrimidin-5-yl)benzyl alcohol; 2-chloroethyl-trimethyl ammonium; N,N-di(phosphonomethyl)glycine; 9-hydroxyfluorene-9-carboxylic acid (or ester); 2-chloro-9-hydroxyfluorene-9-carboxylic acid (or ester); N-1-naphthylphthalamic acid; 2,3-dihydro-5,6-diphenyl-1,4-oxathiine; N-(3,4-dimethyl-3-cyclohexenyl)butylamine; and 3,5-dinitro-2,6-dimethyl-4-tert.-butylacetophenone; or mixtures of these compounds

*Fungicides, for example:*

1. organic tin compounds, for example, triphenyltin hydroxide and triphenyltin acetate;
2. alkylene bisdithiocarbamates, for example, zinc ethylenebisdithiocarbamate and manganese ethylene bisdithiuocarbamate;
3. 1-acyl- or 1-carbamoyl-2-benzimidazole carbamates and 1,2-bis (3-alkoxycarbonyl-2-thiureido)benzene;

and furthermore 2,4-dinitro-6-(1-methylheptylphenylcrotonate), 1-[bis-dimethylamino)phosphoryl]-3-phenyl-5-amino-1,2,4-triazole, N-(trichloromethylthio)phthalimide, N-(trichloromethylthio)tetrahydrophthalimide, N-(1,1,2,2-tetrachloroethylthio)-tetrahydrophthalimide, N-dichlorofluoromethylthio-N-phenyl-N,N'-dimethylsulphamide, tetrachloroisophthalonitrile, 2-(4'-thiazolyl)-benzimidazole, 5-butyl-2-ethylamino-6-methylpyrimidine-4-yl-dimethylsulphamate, 1-(4-chlorophenoxy)-3,3-dimethyl-1(1,2,4-triazole-1-yl)-2-butanone, α-(2-chlorophenyl)-α-(4-chlorophenyl)-5-pyrimidinemethanol, 1-(isopropylcarbamoyl)-3-(3,5-dichlorophenyl)hydantoin, N-tridecyl-2,6-dimethylmorpholine, metal salts of ethyl phosphite, and N-(2,6-dimethylphenyl-N-methoxyacetyl)alanine methyl ester, or mixtures of these compounds.

The dosage of the composition according to the invention desired for practical application will, of course, depend on various factors, for example, field of application, active substance chosen, form of composition, nature and size of the weeds and the crops, and the weather conditions.

In general it holds that for herbicidal application favourable results are reached with a dosage which corresponds with 0.01 to 5 kg of active substance per hectare, preferably 0.1 to 3 kg per hectare. For leaf-desiccation good results are obtained with a dosage corresponding with 0.1 to 5 kg of active substance per hectare, preferably 1 to 5 kg per hectare.

It has been found that the herbicidal activity, as well as the effectivity for leaf-desiccation of the compositions according to the invention may increase considerably by using suitable adjuvants, for example, mineral oils and/or polyoxyethylene compounds, such as the mineral oils and surface-active substances stated in Netherlands Patent Application 7613453. Dependent on the application, the quantity of the adjuvant to be used may vary within wide limits and usually is between 10 and 10,000 ml per hectare.

The compounds according to the invention are new substances which can be prepared in a manner known *per se* for the synthesis of related compounds.

Thus the new compounds of the general formula

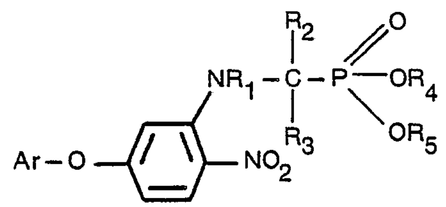

wherein the symbols have the above meanings, can be prepared by reacting a compound of the general formula

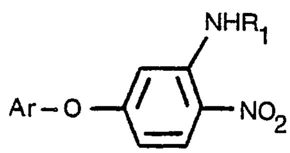

wherein Ar and $R_1$ have the above meanings,
with an aliphatic aldehyde or ketone of the general formula

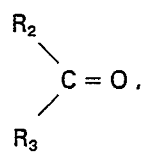

wherein $R_2$ and $R_3$ have the above meanings, and with a di- or trialkyl phosphite or a cyclic phosphite of the general formula

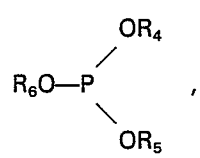

wherein $R_4$ and $R_5$ have the above meanings, and $R_6$ is a hydrogen atom or an alkyl group having 1—6 carbon atoms. Instead of the above aliphatic aldehyde a polymerized aldehyde such as paraldehyde can be used.

A further surprising aspect of the invention is, that it has been found that the above reaction with aliphatic aldehyde and phosphite can best be carried out in an inert organic solvent, for example, an aromatic hydrocarbon, for example, toluene, in the presence of a catalytic quantity of a Lewis acid, preferably anhydrous ferric chloride or borontrifluoride, the latter for example in the form of an ether complex, e.g. boron trifluoride etherate. The reaction is generally carried out at a temperature betweem room temperature and the boiling-point of the solvent used, preferably at the boiling-point of the solvent. The above reaction proceeds in a better yield than with an organic base, e.g. a tertiary amine, as the catalyst instead of a Lewis acid.

New compounds of the general formula

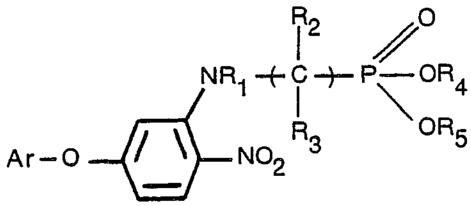

wherein the symbols have the meanings given before, can be prepared by reacting a compound of the general formula

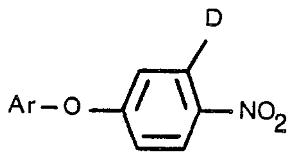

wherein D is a halogen atom, a nitro group or an optionally substituted arlyoxy group, with an amino compound of the general formula

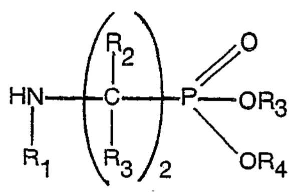

The above reaction is preferably carried out in an inert organic solvent, e.g. dimethylformamide or an ether such as dioxane, at a reaction temperature between 0°C and the boiling-point of the solvent used.

The invention will now be described in greater detail with reference to the following specific examples.

Example I

Preparation of diethyl 1-[N-{2-nitro-5-(2-chloro-4-trifluoromethylphenoxy)phenyl}amino]ethane phosphonate (2)

35.6 g (37 ml) of triethyl phosphite, 13.3 g (17 ml) of acetaldehyde and 4 ml of boron trifluoride etherate were successively added to a solution of 23.4 g of 2-nitro-5-(2-chloro-4-trifluoromethylphenoxy)aniline in 300 ml of toluene. After refluxing for 2 hours, the reaction mixture was cooled, after which another 7.8 g (10 ml) of acetaldehyde were added. The reaction mixture was then refluxed again for 2 hours, cooled and washed successively with 200 ml of 2 N hydrochloric acid and three times with water. After drying, filtering, distilling off the volatile constituents under reduced pressure and column chromatography of the residue over silica as a carrier and with ethyl acetate as an eluent, 26.8 g of the desired product were obtained as a yellow syrupy liquid. Elementary analysis: 45.82% C (calculated 45.93), 4.25% H (calculated 4.26), 5.57% N (calculated 5.64) and 6.28% P (calculated 6.23).

The following compounds were prepared in a corresponding manner:
Solid compounds were purified by means of a recrystallization. The compounds are identified by the compound numbers used in the specification before.

(1) melting point 105°C;
Elementary analysis: 43.82% C (calculated 44.15), 3.82% H calculated 3.94), 16.22% Cl (calculated 16.29), 6.42% N (calculated 6.44) and 7.22% P (calculated 7.13);
the last compound could be prepared in substantially the same yield by using anhydrous $FeCl_3$ instead of $BF_3$, and by using paraldehyde instead of acetaldehyde;
(5) melting-point 82—83°C;
Elementary analysis: 43.02% C (calculated 43.44), 4.08% H (calculated 4.05), 21.07% Cl (calculated 21.37), 5.56% N (calculated 5.63), and 6.14% P (calculated 6.22);
(6) identified by means of NMR spectrum; syrupy liquid;
(4) syrupy liquid;
Elementary analysis: found 46.62% C (calculated 46.66), found 5.10% H (calculated 4.57), found 14.94% Cl (calculated 15.31), found 5.93% N (calculated 6.04) and found 6.61% P (calculated 6.69);
(3) syrup; IR: ν ($cm^{-1}$) 3350, 1630, 1340, 1320, 1260, 1230, 1170, 1130, 1080, 1050, 1030, 750;
(7) melting-point 91°C;
(8) melting-point 93°C;
(9) melting-point 122°C;
(10) syrup; IR: ν ($cm^{-1}$) 3340, 1630, 1338, 1260, 1220, 1050, 1030, 752;
(11) syrup; IR: ν ($cm^{-1}$) 3335, 1630, 1342, 1260, 1225, 1050, 1030, 752;

(12) melting-point 78°C;
(14) syrup; IR: v ($cm^{-1}$) 3340, 1630, 1340, 1320, 1255, 1220, 1170, 1133, 1113, 1050, 1030, 750;
(15) melting-point 133°C;
(16) melting-point 131°C;
(17) syrup; IR: ($cm^{-1}$) 3335, 1625, 1338, 1260, 1230, 1050, 1030, 965, 750;
(18) melting-point 77°C;
(19) melting-point 95°C;
(20) syrup; PMR ($CDCl_3$) δ 8.61 (NH, t), 8.19 (d), 7.53 (d), 7.32 (g),709 (d), 6.26 (q), 6.12 (d), 5.55 (2, m), 4.20 (5, m), 1.70 (3, m), 1.30 (6, m);
(21) syup; IR: v ($cm^{-1}$) 3360, 1628, 1340, 1250, 1230, 1050, 1020, 970, 750;
(22) melting-point 111°C;
(23) syrup IR: v ($cm^{-1}$) 3320, 1733, 1630, 1332, 1260, 1230, 1040, 755;
(24) syrup; IR v ($cm^{-1}$) 3340, 1638, 1340, 1255, 1225, 990, 753;
(25) syrup; PMR ($CDCl_3$) 8.30 (NH, q), 8.18 (d), 7.53 (d), 7.32 (q), 7.12 (d), 6.33 (d), 6.20 (q), 3.55—3.80 (7, m) 1.65—2.12 (2, m) 1.04 (3, t);
(26) syrup; IR: v ($cm^{-1}$) 3340, 1630, 1340, 1255, 1225, 1000, 754;
(27) melting-point 175°C;
(28) syrup; IR: v ($cm^{-1}$) 3340, 1630, 1340, 1260, 1210, 1050, 1030, 750;
(29) melting point 75°C;
(30) melting-point 145°C;
(31) syrup; PMR ($CDCl_3$) δ 8.31 (NH), 8.26 (d), 8.22 (d), 7.95 (q), 7.42 (d), 6.68 (d), 6.36 (q), 3.70—4.20 (7, m), 1.58 (3, q);
(32) syrup; PMR ($CDCl_3$) δ 8.25 (NH, q) 8.20 (d), 8.14 (d), 7.88 (q) 7.35 (d), 6.30 (d), 6.22 (d), 4.16 (2, m), 3.88 (m), 1.54 )q), 1.32 (3, t);
(33) melting-point 140°C;
(34) melting-point 99°C;
(35) melting-point 151°C;
(36) syrup; IR: v ($cm^{-1}$) 3350, 1630, 1342, 1260, 1220, 1050, 1030, 750;
(37) syrup; IR: v ($cm^{-1}$) 3350, 1635, 1344, 1260, 1220, 1050, 1039, 750;
(38) syrup; IR: v ($cm^{-1}$) 3340, 1690, 1630, 1338, 1250, 1220, 1050, 1030, 750;
(39) melting-point 110°C;
(40) melting-point 63°C;
(41) syrup; CMR for $F_2F^1H—C^2F_2—O—C_6H_3(Cl)OC_6H_3(NO_2)—NHC^3H(C^4H_3)—P(O)(OC^5H_3)OC^6H_3$: chemical shift (ppm) (coupling-Hz) $C^1$ 107.5 (252.5; 40.7), $C^2$ 116.5 (273.5; 28.7), $C^3$ 45.6 (160.0), $C^4$ 16.1, $C^5$ 53.5 (7.4), $C^6$ 53.4 (6.5);
(42) syrup; IR: v ($cm^{-1}$) 3340, 1630, 1340, 1260, 1220, 1050, 1030, 752;
(43) melting-point 101°C;
(44) melting-point 62°C;
(45) melting-point 130°C; and
(46) melting-point 103°C.

## Example II

Preparation of diethyl 1-[N-{2-nitro-5-(2,4-dichlorophenoxy)phenyl}amino]ethane phosphonate.

A mixture of 27.5 g of diethyl phosphite, 4.4 g of acetaldehyde and 2 g of triethylamine was heated on 60—70°C for 45 minutes. After adding another 4.4 g of acetaldehyde the mixture was heated again for 1 hour. Again a portion of acetaldehyde (2.4 g) was added and the reaction mixture was kept at room temperature overnight.

A solution of 15 g of 2.4-dichloro-3′-amino-4′-nitrodiphenylether in 200 ml of toluene was added to the above reaction mixture. The reaction mixture obtained was refluxed for 4 hours. After washing with water, dilute hydrochloric acid and water again the organic solvent was evaporated, yielding the crude product as a red oil. The oil was chromatographed over silica (ether as a eluent) producing 11.5 g of the desired product. The product, a syrupy liquid, was identical with compound no. (14) prepared according to Example I.

## Example III

Preparation of diethyl 2-[N-{2-nitro-5-(2-chloro-4-trifluoromethylphenoxy)phenyl}amino]ethane phosphonate.

A solution of 3.63 g of 2-chloro-4-trifluoromethyl-3′,4′-dinitrodiphenyl ether and 5,85 g of O,O-diethyl(2-aminoethane)phosphonate in 10 ml of dioxane was stirred at 50°C for 3 hours. After cooling down to room temperature and adding water the aqueous phase was extracted with methylene chloride. After washing and drying the organic phase was reduced under diminished pressure, yielding an oily substance. The product obtained was chromatographed over silica (ethyl acetate as the eluent). The desired product was obtained as an orange syrup in a yield of 4.03 g; v ($cm^{-1}$) 3360, 1630, 1342, 1325, 1260, 1240, 1170, 1130, 1080, 1050, 1030, 960, 750.

The compound (4) could be prepared in substantially the same yield under exactly the same reaction conditions, but starting from 2,4-bis(2,4-dichlorophenoxy)-nitro-benzene as the diphenyl ether compound.

Example IV

(a) Preparation of a solution of an active substance, namely diethyl 1-[N-{2-nitro-5-(2-chloro-4-trifluoromethylphenoxy)phenyl}amino]ethane phosphonate, in a water-miscible liquid ("liquid").

10 g of the above active substance were dissolved in a mixture of 10 ml of isophorone and approximately 70 ml of dimethylformamide, after which polyoxyethylene glycol ricinyl ether as an emulsifier was added in a quantity of 10 g.

In a corresponding manner the other active substances were processed to 10% to 20% "liquids".

In a corresponding manner, "liquids" were obtained in N-methyl pyrrolidone, dimethylformamide, and a mixture of N-methyl pyrrolidone and isophorone as solvents.

(b) Preparation of a solution of the active substance in an organic solvent.

200 g of the active substance to be examined were dissolved in 1,000 ml of acetone in the presence of 1.6 g of nonylphenolpolyoxyethylene. After dilution this solution was used as a spraying liquid.

(c) Preparation of an emulsifiable concentrate of the active substance.

10 g of the active substance to be examined were dissolved in a mixture of 15 ml of isophorone and 70 ml of xylene; 5 g of a mixture of a polyoxyethylene sorbitan ester and an alkyl benzene sulphonate were added to this solution as an emulsifier.

(d) Preparation of a dispersible powder (W.P) of the active substance.

25 g of the active substance to be examined were mixed with 68 g of laolin in the presence of 2 g of sokium butylnaphthalene sulphonate and 5 g of lignin sulphonate.

(e) Preparation of a suspension concentrate (flowable) of the active substance.

A mixture of 10 g of active substance, 2 g of lignine sulphonate and 0.8 g of a sodium alkyl sulphate was replenished with water up t a total quantity of 100 ml.

(f) Preparation of a granule of the active substance.

7.5 g of active substance, 5 g of sulphite lye and 87.5 g of ground dolomite were mixed, after which the resulting mixture was processed to a granular composition by means of the so-called compacting method.

Example V

Selective control weeds ("post-emergence") in agricultural and horticultural crops; open-air experiment (field screening).

Compounds according to the invention were used in a formulation obtained according to Example IV (a) in a quantity of 0.1 kg per hectare in a trial plot comprising the following weeds: *Galinsoga parviflora* (small-flowered g., Gp), *Galium aparine* (cleavers, Ga), *Chenopodium album* (common lambs-quarters, Ca), and *Polygonum convolvulus* (wild buckwheat, Pc); the following crops were present in the trial plot: *Tritucum aestivum* (wheat, Ta) and *Pisum sativum* (pea, Ps).

The weeds and crops were sown simultaneously. After coming-up they were sprayed with a "liquid" poured-out in water, obtained according to Example IV (a), by means of a Teejet nozzle mounted on a spraying boom of a tractor. The spray liquid was sprayed in a quantity of 500 litres per hectare.

After 14 days the herbicidal activity was evaluated. The results are recorded in Table A. The meanings of the symbols recorded in the Table are as follows:

− = no or hardly any observable damage
± = obvious damage
+ = serious damage
++ = the plants are dead

TABLE A

Results of open-air experiment in post-emergence application; 0.1 kg of active substance per hectare.
2,4-dichloro-3'-isopropylamino-4'-nitrodiphenyl ether = known

| Compound No. | Activity on | | | | | |
|---|---|---|---|---|---|---|
| | Ta | Ps | Gp | Ga | Ca | Pc |
| (2) | + | ± | ++ | ++ | ++ | ++ |
| (4) | ± | - | ++ | + | ++ | ++ |
| (5) | ± | ± | ++ | ++ | ++ | + |
| known | ± | ± | ± | + | ++ | ++ |

## Example VI

Selective control of weeds ("pre-emergence") in agricultural and horticultural crops; open-air experiment (field screening).

Compounds according to the invention were used in a formulation obtained according to Example IV (a) in a quantity of 3 kg per hectare against the weeds mentioned in Example V; in the trial plot the following crops were sown: *Triticum aestivum* (wheat, Ta), *Pisum sativum* (pea, Ps) and *Glycine max* (soya, Gm).

The weeds and crops were sown simultaneously. Before comimg-up they were sprayed with a "liquid", obtained according to Example IV (a) poured-out in water, by means of the spraying device described in Example V. The spray liquid was sprayed in a quantity of 500 litres per hectare.

After 21 days the herbicidal activity was evaluated. The results are recorded in Table B; the meanings of the symbols are the same as in Example V.

TABLE B

Results open-air experiment in pre-emergence application;
3 kg of active substance per hectare

| Compound No. | Activity on | | | | | | |
|---|---|---|---|---|---|---|---|
| | Ta | Ps | Gm | Gp | Ga | Ca | Pc |
| (2) | - | ± | ± | ++ | ++ | ++ | ++ |
| (5) | - | - | - | ++ | ++ | + | - |

## Example VII

Selective control of weeds ("post-emergence") in agricultrural and horticultural crops; glasshouse experiments.

Compounds according to the invention were used in a formulation obtained according to Example IV (b) in the dosages indicated in Table C below against the following weeds: *Galinsoga parviflora* (small-flowered g., Gp), *Galium aparine (cleavers, Ga), Chenopodium album* (common lambsquarters, Ca), and *Polygonim convolvulus* wild buckwheat, Pc); the following crops were present: *Tritium aestivum* (wheat, Ta), *Oryza sativa* (rice, Os) and *Glycine max* (soya, Gm). The weeds and crops were sown simultaneously. After coming-up they were sprayed with a spraying liquid, obtained according to Example IV (b), by means of a Sata sprayer. The herbicidal activity was determined after 2 weeks. The results are recorded in Table C; the meanings of the symbols are the same as in Example V.

TABLE C

Results glasshouse experiments in post-emergence application.

2,4-dichloro-3′-isopropylamino-4′-nitrodiphenyl ether = known

| Compound No. | Dosage in g act. subst. per ha | Activity on | | | | | | |
|---|---|---|---|---|---|---|---|---|
| | | Ta | Os | Gm | Gp | Ga | Ca | Pc |
| (1) | 100 | + | + | + | ++ | ++ | ++ | ++ |
| | 50 | ± | ± | + | ++ | ++ | ++ | ++ |
| | 10 | ± | ± | + | ++ | ++ | ++ | ++ |
| (4) | 100 | ± | ± | + | ++ | ++ | ++ | ++ |
| | 50 | ± | ± | + | ++ | + | ++ | ++ |
| | 30 | ± | ± | + | ++ | + | ++ | ++ |
| (5) | 100 | ± | ± | + | ++ | + | ++ | ++ |
| (6) | 100 | ± | − | ± | ++ | + | + | ++ |
| known | 100 | ± | + | + | + | ± | ++ | ++ |

Example VIII

Exactly as described in Example VII compounds according to the invention were tested in the glasshouse with regard to their herbicidal activity against the weeds defined in Example VII.

The results are recorded in Table D; the meanings of the symbols are the same as in Example V. All compounds were tested in a dosage of 100 g of active substance per hectare.

TABLE D

| Compound No. | Activity on | | | |
|---|---|---|---|---|
| | Gp | Ga | Ca | Pc |
| (1) | ++ | ++ | ++ | ++ |
| (2) | ++ | ++ | ++ | ++ |
| (3) | ++ | ++ | ++ | ++ |
| (4) | ++ | ++ | ++ | ++ |
| (7) | ++ | ++ | ++ | ++ |
| (8) | ++ | ++ | ++ | ++ |
| (9) | ++ | + | ++ | ++ |
| (10) | ++ | + | ++ | ++ |
| (11) | ++ | + | ++ | ++ |
| (12) | ++ | ++ | ++ | ++ |
| (13) | + | + | ++ | ++ |
| (14) | ++ | ++ | ++ | ++ |
| (15) | ++ | ++ | ++ | ++ |
| (16) | ++ | ++ | ++ | ++ |
| (17) | ++ | ++ | ++ | ++ |
| (18) | ++ | ++ | ++ | ++ |
| (19) | ++ | + | ++ | ++ |
| (20) | ++ | + | ++ | ++ |
| (21) | ++ | ++ | ++ | ++ |
| (22) | ++ | + | ++ | ++ |
| (23) | + | + | ++ | ++ |
| (24) | + | + | ++ | ++ |
| (25) | ++ | ++ | ++ | ++ |
| (26) | ++ | ++ | ++ | ++ |
| (27) | ++ | ++ | ++ | ++ |
| (28) | ++ | + | ++ | ++ |
| (29) | ++ | ++ | ++ | ++ |
| (30) | ++ | ++ | ++ | ++ |

TABLE D (Continued)

| Compound No. | Activity on | | | |
|---|---|---|---|---|
| | Gp | Ga | Ca | Pc |
| (31) | ++ | + | ++ | ++ |
| (32) | ++ | ++ | ++ | ++ |
| (33) | ++ | + | ++ | ++ |
| (34) | ++ | + | ++ | + |
| (35) | ++ | ++ | ++ | ++ |
| (36) | ++ | ++ | ++ | ++ |
| (37) | ++ | ++ | ++ | ++ |
| (38) | ++ | ++ | ++ | ++ |
| (39) | ++ | ++ | ++ | ++ |
| (40) | + | + | ++ | ++ |
| (41) | ++ | ++ | ++ | ++ |
| (43) | + | + | ++ | ++ |
| (44) | ++ | ± | ++ | ++ |
| (45) | ++ | ± | ++ | ++ |

Example IX

Potato and cotton desiccation

Compounds accoarding to the invention were used in a composition obtained according to Example IV(b). The plants were sprayed with these liquids in the quantities tabulated below. After 2 weeks the activity of leaf desiccation, and, for cotton, of leaf abscission was evaluated. The results are recorded in Table E. The meanings of the symbols are as follows:

− = no or hardly any desiccation effect
± = obvious effect
+ = strong desiccation
++ = complete dieing back or abscission of the leaves.

TABLE E

| Leaf desiccation | | | | | | |
|---|---|---|---|---|---|---|
| Compound | | Act. on potato | | Activity on cotton | | |
| No. | Dosage (kg/ha) | Leaves | Stem | Leaves | Stem | Leaf abacission |
| (1) | 3 | ++ | + | | | |
| | 1 | ++ | + | | | |
| (4) | 5 | | | ++ | + | ++ |
| | 3 | ++ | ++ | | | |
| | 1 | + | + | + | ± | − |
| (5) | 3 | ± | ± | + | ± | + |
| | 1 | ± | − | + | ± | ± |

**Claims for the Contracting States: BE CH DE FR GB IT LI NL**

1. An arylphenyl ether of the general formula

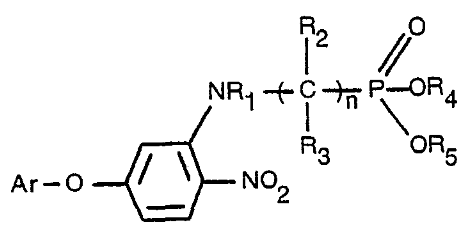

(I)

wherein

Ar is a phenyl or pyridyl group, which groups are substituted with 1, 2 or 3 substituents, selected from a halogen atom, a cyano group, a nitro group, an optionally halogenated alkyl, alkoxy and alkylthio group having 1—6 carbon atoms, an alkylsulphonyl group having 1—4 carbon atoms, and an alkanoyl group having 1—4 carbon atoms;

n is 1 or 2;

$R_1$ and $R_2$, which are the same or different, represent hydrogen atoms or alkyl groups having 1—4 carbon atoms;

$R_3$ is a hydrogen atom, an alkyl group having 1—4 carbon atoms optionally substituted with an alkoxycarbonyl group with 2—5 carbon atoms, or an alkenyl group having 2—4 carbon atoms; or

$R_2$ and $R_3$ together form an alkylene group with 2—5 carbon atoms; and

$R_4$ and $R_5$, which are the same or different, represent alkyl groups having 1—6 carbon atoms; or

$R_4$ and $R_5$ together form an alkylene group having 2 or 3 carbon atoms;

with the proviso, that, if n is 2 or $R_1$ is $C_1$—$C_4$ alkyl, Ar does not represent a phenyl or pyridyl group substituted with 1—3 substituents, selected from halogen, cyano, nitro and trifluoromethyl.

2. A compound as claimed in claim 1, of the general formula

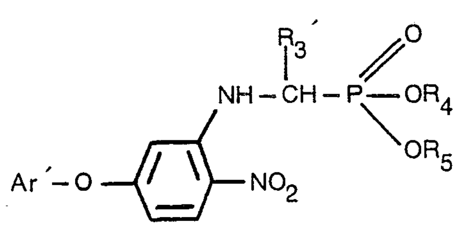

(II)

wherein

Ar' is a phenyl group, substituted in the 2,4- or 2,4,6-positions with substituents selected from a halogen atom, a nitro group and a trifluoromethyl group, with the proviso that not more than one of the substituents represents a nitro group or a trifluoromethyl group,

$R_3'$ is an alkyl group having 1 or 2 carbon atoms, or a vinyl group, and

$R_4$ and $R_5$ have the meanings given in claim 1.

3. A compound as claimed in claim 2, selected from dimethyl and diethyl esters of 1-[N-{2-nitro-5-(2,4-dichlorophenoxy)phenyl}amino]ethane phosphonic acid and of 1-[N-{2-nitro-5-(2-chloro-4-trifluormethyl-phenoxy)phenyl}amino]ethane phosphonic acid.

4. A method for preparing arylphenyl ethers of the general formula

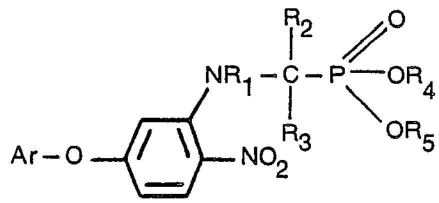

wherein Ar, $R_1$, $R_2$, $R_3$, $R_4$ and $R_5$ have the meanings given in claim 1, however, without the proviso of Claim 1, by reacting a compound of the general formula

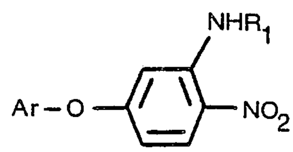

wherein Ar and $R_1$ have the above meanings, with an alipahtic aldehyde or ketone of the general formula

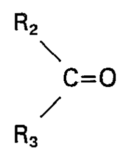

wherein $R_2$ and $R_3$ have the above meanings, and with a di- or trialkyl phosphite or a cyclic phosphite of the general formula

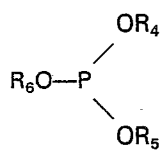

wherein $R_4$ and $R_5$ have the above meanings, and $R_6$ is a hydrogen atom or an alkyl group having 1—6 carbon atoms.

5. A method as claimed in claim 4 for preparing compounds of the general formula

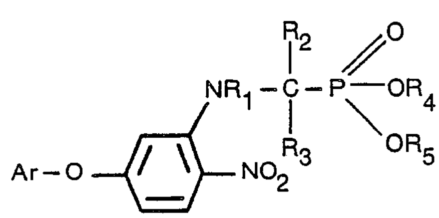

wherein Ar, $R_1$, $R_2$, $R_3$, $R_4$ and $R_5$ have the meanings given in claim 4, by reacting a compound of the general formula

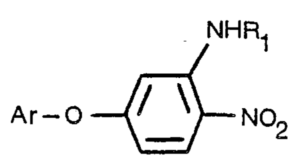

wherein Ar and $R_1$ have the above meanings, with an alipahtic aldehyde or ketone of the general formula

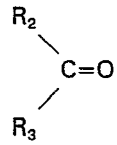

wherein $R_2$ and $R_3$ have the above meanings, and with a di- or trialkyl phosphite or a cyclic phosphite of the general formula

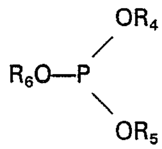

wherein $R_4$ and $R_5$ have the above meanings, and $R_6$ is a hydrogen atom or an alkyl group having 1—6 carbon atoms in an inert organic solvent in the presence of a catalytic quantity of a Lewis acid.

6. A herbicidal composition comprising, in addition to a solid or liquid inert carrier material, a herbicidally effective amount of an arylphenyl ether as claimed in claim 1 as the active substance.

7. A composition for leaf-dessication comprising, in addition to a solid or liquid inert carrier material, an arylphenyl ether as claimed in claim 1 as the active substance in an amount effective for leaf-dessication.

8. A composition as claimed in claim 6 or 7, wherein the active substance is a compound as claimed in claim 2.

9. A composition as claimed in Claims 6 or 7, wherein the active substance is selected from dimethyl and diethyl esters of 1-[N-{2-nitro-5-(2,4-dichlorophenoxy)phenyl}amino]ethane phosphonic acid and of 1-[N-{2-nitro-5-(2-chloro-4-trifluoromethylphenoxy)phenyl}amino]ethane phosphonic acid.

10. A method for preparing a herbicidal composition or a composition for leaf-dissication as claimed in any of claims 6—9 comprising mixing a compound as claimed in claim 1 with a solid or liquid inert carrier material and, if desired, adding other herbicidal and/or pesticidal compounds, artificial manures and/or auxiliary substances such as surface-active substances and stabilizers.

11. A method of controlling undesired plants in an agricultural or horticultural crop comprising treating the crop or the soil destined for the plants with a composition as claimed in any of the claims 6, 8 and 9 in a dosage from 0,01 to 5 kg of active substance per hectare, preferably from 0.1 to 3 kg per hectare.

12. A method of leaf-dessication in an agricultural or horticultural crop comprising treating the crop with a composition as claimed in any of the claims 7—9 in a dosage from 0.1 to 5 kg of active substance per hectare, preferably from 1 to 5 kg per hectare.

**Claims for the Contracting States: LU SE**

1. An arylphenyl ether of the general formula

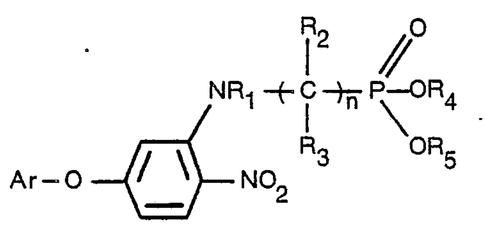

(I)

wherein

Ar is a phenyl or pyridyl group, which groups are substituted with 1, 2 or 3 substituents, selected from a halogen atom, a cyano group, a nitro group, an optionally halogenated alkyl, alkoxy and alkylthio group having 1—6 carbon atoms, an alkylsulphonyl group having 1—4 carbon atoms, and an alkanoyl group having 1—4 carbon atoms;

n is 1 or 2;

$R_1$ and $R_2$, which are the same or different, represent hydrogen atoms or alkyl groups having 1—4 carbon atoms;

$R_3$ is a hydrogen atom, an alkyl group having 1—4 carbon atoms optionally substituted with an alkoxycarbonyl group with 2—5 carbon atoms, or an alkenyl group having 2—4 carbon atoms; or

$R_2$ and $R_3$ together form an alkylene group with 2—5 carbon atoms; and

$R_4$ and $R_5$, which are the same or different, represent alkyl groups having 1—6 carbon atoms; or

$R_4$ and $R_5$ together form an alkylene group having 2 or 3 carbon atoms;

2. A compound as claimed in claim 1, of the general formula

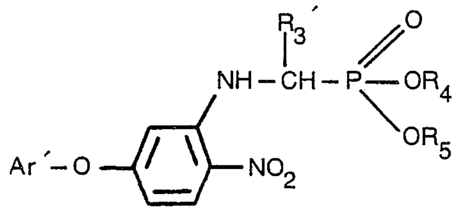

(II)

wherein

Ar′ is a phenyl group, substituted in the 2,4- or 2,4,6-positions with substituents selected from a halogen atom, a nitro group and a trifluoromethyl group, with the proviso that not more than one of the substituents represents a nitro group or a trifluoromethyl group,

$R_3'$ is an alkyl group having 1 or 2 carbon atoms, or a vinyl group, and

$R_4$ and $R_5$ have the meanings given in claim 1.

3. A compound as claimed in claim 2, selected from dimethyl and diethyl esters of 1-[N-{2-nitro-5-(2,4-dichlorophenoxy)phenyl}amino]ethane phosphonic acid and of 1-[N-{2-nitro-5-(2-chloro-4-trifluoromethyl-phenoxy)phenyl}amino]ethane phosphonic acid.

4. A method for preparing arylphenyl ethers of the general formula

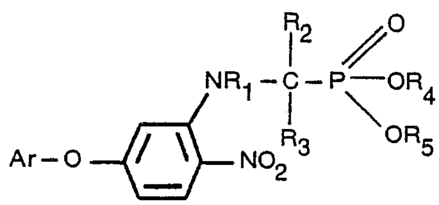

wherein Ar, $R_1$, $R_2$, $R_3$, $R_4$ and $R_5$ have the meanings given in claim 1, by reacting a compound of the general formula

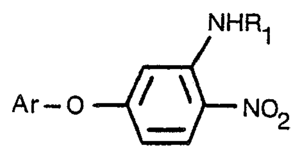

wherein Ar and $R_1$ have the above meanings, with an alipahtic aldehyde or ketone of the general formula

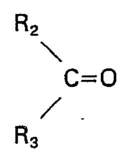

wherein $R_2$ and $R_3$ have the above meanings, and with a di- or trialkyl phosphite or a cyclic phosphite of the general formula

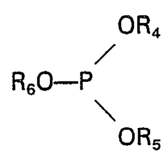

wherein $R_4$ and $R_5$ have the above meanings, and $R_6$ is a hydrogen atom or an alkyl group having 1—6 carbon atoms.

5. A method as claimed in claim 4 for preparing compounds of the general formula

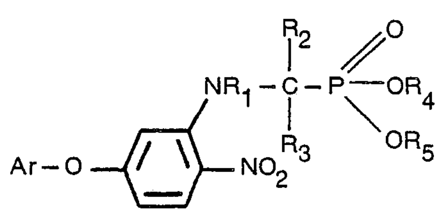

wherein Ar, $R_1$, $R_2$, $R_3$, $R_4$ and $R_5$ have the meanings given in claim 1, by reacting a compound of the general formula

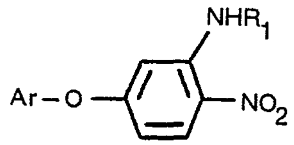

wherein Ar and $R_1$ have the above meanings, with an alipahtic aldehyde or ketone of the general formula

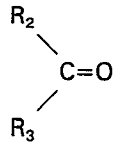

wherein $R_2$ and $R_3$ have the above meanings, and with a di- or trialkyl phosphite or a cyclic phosphite of the general formula

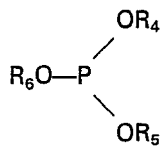

wherein $R_4$ and $R_5$ have the above meanings, and $R_6$ is a hydrogen atom or an alkyl group having 1—6 carbon atoms in an inert organic solvent in the presence of a catalytic quantity of a Lewis acid.

6. A method for preparing arylphenyl ethers of the general formula

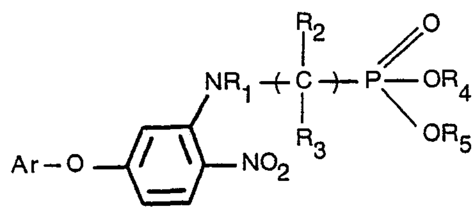

wherein Ar, $R_1$, $R_2$, $R_3$, $R_4$ and $R_5$ have the meanings given in claim 1, by reacting a compound of the general formula

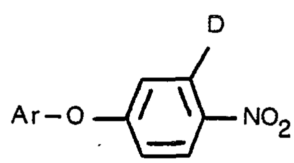

wherein Ar has the meaning given in Claim 1, and D is a halogen atom, a nitro group or an optionally substituted aryloxy group, with an amino compound of the general formula

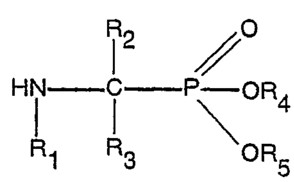

wherein $R_1$, $R_2$, $R_3$, $R_4$ and $R_5$ have the meanings given in Claim 1.

7. A herbicidal composition comprising, in addition to a solid or liquid inert carrier material, a herbicidally effective amount of an arylphenyl ether as claimed in claim 1 as the active substance.

8. A composition for leaf-dessication comprising, in addition to a solid or liquid inert carrier material, an arylphenyl ether as claimed in claim 1 as the active substance in an amount effective for leaf-dessication.

9. A composition as claimed in claim 7 or 8, wherein the active substance is a compound as claimed in claim 2.

10. A composition as claimed in claim 7 or 8, wherein the active substance is selected from dimethyl and diethyl esters of 1-[N-{2-nitro-5-(2,4-dichlorophenoxy)phenyl}amino]ethane phosphonic acid'and of 1-[N-{2-nitro-5-(2-chloro-4-trifluoromethylphenoxy)phenyl}amino]ethane phosphonic acid.

11. A method for preparing a herbicidal composition or a composition for leaf-dissication as claimed in any of claims 7—10 comprising mixing a compound as claimed in claim 1 with a solid or liquid inert carrier material and, if desired, adding other herbicidal and/or pesticidal compounds, artificial manures and/or auxiliary substances such as surface-active substances and stabilizers.

12. A method of controlling undesired plants in an agricultural or horticultural crop comprising treating the crop or the soil destined for the plants with a composition as claimed in any of the claims 7, 9 and 10 in a dosage from 0,01 to 5 kg of active substance per hectare, preferably from 0.1 to 3 kg per hectare.

13. A method of leaf-dessication in an agricultural or horticultural crop comprising treating the crop with a composition as claimed in any of the claims 8—10 in a dosage from 0.1 to 5 kg of active substance per hectare, preferably from 1 to 5 kg per hectare.

**Claims for the Contracting State: AT**

1. A method for preparing arylphenyl ethers of the general formula

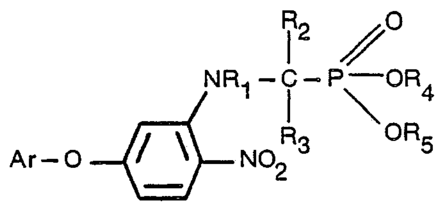

wherein

Ar is a phenyl or pyridyl group, which groups are substituted with 1, 2 or 3 substituents, selected from a halogen atom, a cyano group, a nitro group, an optionally halogenated alkyl, alkoxy and alkylthio group having 1—6 carbon atoms, an alkylsulphonyl group having 1—4 carbon atoms, and an alkanoyl group having 1—4 carbon atoms;

n is 1 or 2;

$R_1$ and $R_2$, which are the same or different, represent hydrogen atoms or alkyl groups having 1—4 carbon atoms;

$R_3$ is a hydrogen atom, an alkyl group having 1—4 carbon atoms optionally substituted with an alkoxycarbonyl group with 2—5 carbon atoms, or an alkenyl group having 2—4 carbon atoms; or

$R_2$ and $R_3$ together form an alkylene group with 2—5 carbon atoms; and

$R_4$ and $R_5$, which are the same or different, represent alkyl groups having 1—6 carbon atoms; or

$R_4$ and $R_5$ together form an alkylene group having 2 or 3 carbon atoms;

by reacting a compound of the general formula

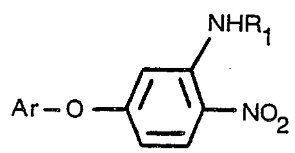

wherein Ar and $R_1$ have the above meanings, with an alipahtic aldehyde or ketone of the general formula

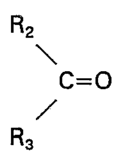

wherein $R_2$ and $R_3$ have the above meanings, and with a di- or trialkyl phosphite or a cyclic phosphite of the general formula

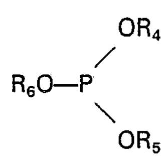

wherein $R_4$ and $R_5$ have the above meanings, and $R_6$ is a hydrogen atom or an alkyl group having 1—6 carbon atoms.

2. A method as claimed in claim 1 for preparing compounds of the general formula

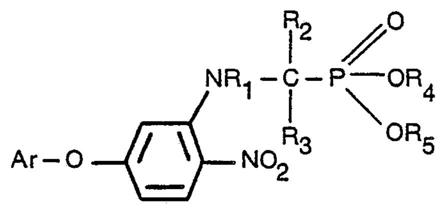

wherein Ar, $R_1$, $R_2$, $R_3$, $R_4$ and $R_5$ have the meanings given in claim 1 by reacting a compound of the general formula

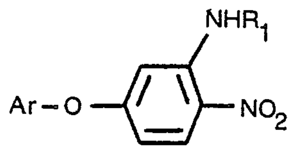

wherein Ar and $R_1$ have the above meanings, with an alipahtic aldehyde or ketone of the general formula

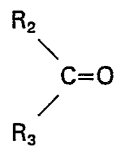

wherein $R_2$ and $R_3$ have the above meanings, and with a di- or trialkyl phosphite or a cyclic phosphite of the general formula

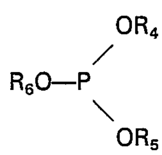

wherein $R_4$ and $R_5$ have the above meanings, and $R_6$ is a hydrogen atom or an alkyl group having 1—6 carbon atoms in an inert organic solvent in the presence of the catalytic quantity of a Lewis acid.

3. A herbicidal composition comprising, in addition to a solid or liquid inert carrier material, a herbicidally effective amount of an arylphenyl ether of the general formula

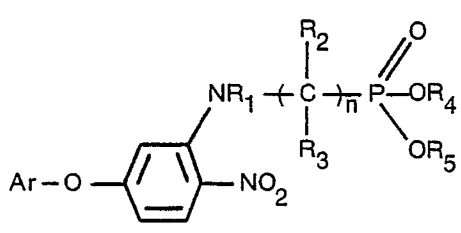

(I)

wherein Ar, $R_1$, $R_2$, $R_3$, $R_4$ and $R_5$ have the meanings given in claim 1, and n is 1 or 2; with the proviso, that, if n is 2 or $R_1$ is $C_1$—$C_4$ alkyl, Ar does not represent a phenyl or pyridyl group substituted with 1—3 substituents, selected from halogen, cyano, nitro and trifluoromethyl, as the active substance.

4. A composition for leaf-dessication comprising, in addition to a solid or liquid inert carrier material, an arylphenyl ether of the general formula I, wherein the symbols have the meanings given in Claim 3 as the active substance in an amount effective for leaf-dessication.

5. A composition as claimed in claim 3 or 4, wherein the active substance is a compound of the general formula

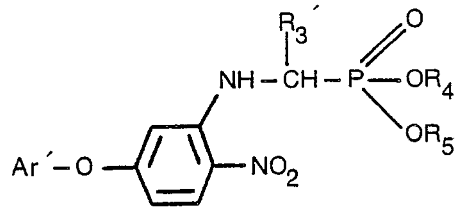

wherein

Ar′ is a phenyl group, substituted in the 2,4- or 2,4,6-positions with substituents selected from a halogen atom, a nitro group and a trifluoromethyl group, with the proviso that not more than one of the substituents represents a nitro group or a trifluoromethyl group,

$R_3'$ is an alkyl group having 1 or 2 carbon atoms, or a vinyl group, and

$R_4$ and $R_5$ have the meanings given in claim 1.

6. A compostion as claimed in claim 3 or 4, wherein the active substance is selected from dimethyl and diethyl esters of 1-[N-{2-nitro-5-(2,4-dichlorophenoxy)phenyl}amino]ethane phosphonic acid and of 1-[N-{2-nitro-5-(2-chloro-4-trifluoromethylphenoxy)phenyl}amino]ethane phosphonic acid

7. A method for preparing a herbicidal composition or a composition for leaf-dissication as claimed in any of claims 3—6 comprising mixing a compound of the general formula I, wherein the symbols are as defined in claim 3 with a solid or liquid inert carrier material and, if desired, adding other herbicidal and/or pesticidal compounds, artificial manures and/or auxiliary substances such as surface-active substances and stabilizers.

8. A method of controlling undesired plants in an agricultural or horticultural crop comprising treating the crop or the soil destined for the plants with a composition as claimed in any of the claims 3, 5 and 6 in a dosage from 0,01 to 5 kg of active substance per hectare, preferably from 0.1 to 3 kg per hectare.

9. A method of leaf-dessication in an agricultural or horticultural crop comprising treating the crop with a composition as claimed in any of the claims 4—6 in a dosage from 0.1 to 5 kg of active substance per hectare, preferably from 1 to 5 kg per hectare.

**Patentansprüche für die Vertragsstaaten: BE CH DE FR GB IT LI NL**

1. Ein Arylphenyläther der allgemeinen Formel

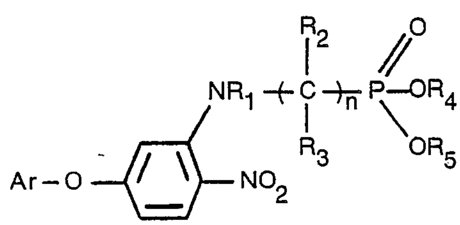

(I)

worin

Ar eine Phenyl- oder Pyridylgruppe ist, welche Gruppen mit 1, 2 oder 3 Substituenten ausgewählt aus einem Halogenatom, einer Cyanogruppe, einer Nitrogruppe, einer gegebenenfalls halogenierten Alkyl-, Alkoxy- und Alkylthiogruppe mit 1 bis 6 C-Atomen, einer Alkylsulfonylgruppe mit 1 bis 4 C-Atomen und einer Alkanoylgruppe mit 1 bis 4 C-Atomen substituiert sind;

n 1 oder 2 ist;

$R_1$ und $R_2$, die gleich oder verschieden sind, Wasserstoffatome oder Alkylgruppen mit 1 bis 4 C-Atomen darstellen;

$R_3$ ein Wasserstoffatom, eine Alkylgruppe mit 1 bis 4 C-Atomen gegebenenfalls substituiert mit einer Alkoxycarbonylgruppe mit 2 bis 5 C-Atomen oder eine Alkenylgruppe mit 2 bis 4 C-Atomen bedeuten; oder

$R_2$ und $R_3$ miteinander eine Alkylengruppe mit 2 bis 5 C-Atomen bilden; und

$R_4$ und $R_5$, die gleich oder verschieden sind, Alkylgruppen mit 1 bis 6 C-Atomen bedeuten; oder

$R_4$ und $R_5$ miteinander eine Alkylengruppe mit 2 oder 3 C-Atomen bilden;

mit der Maßgabe, daß, wenn n 2 ist oder $R_1$ $C_1$—$C_4$-Alkyl bedeutet, Ar keine Phenyl- oder Pyridylgruppe substituiert mit 1 bis 3 Substituenten ausgewählt aus Halogen, Cyano, Nitro und Trifluormethyl ist.

2. Verbindung, wie in Anspruch 1 beansprucht, der allgemeinen Formel

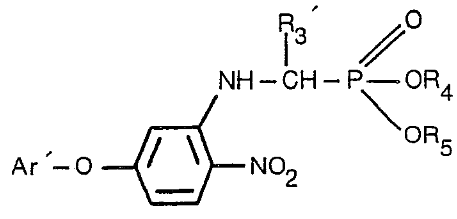

(II)

worin

Ar' eine Phenylgruppe substituiert in Stellung 2,4 oder 2,4,6 mit Substituenten ausgewählt aus einem Halogenatom, einer Nitrogruppe und einer Trifluormethylgruppe, ist, mit der Maßgabe, daß nicht mehr als einer der Substituenten eine Nitrogruppe oder eine Trifluormethylgruppe darstellt,

$R_3'$ eine Alkylgruppe mit 1 oder 2 C-Atomen oder eine Vinylgruppe bedeutet und

$R_4$ und $R_5$ die in Anspruch 1 angegebenen Bedeutungen haben.

3. Verbindung, wie in Anspruch 2 beansprucht, ausgewählt aus Dimethyl- und Diäthylestern von 1-[N-{2-Nitro-5-(2,4-dichlorphenoxy)-phenyl}-amino]-äthanphosphonsäure und 1-[N-{2-Nitro-5-(2-chlor-4-trifluormethylphenoxy)-phenyl}-amino]-äthanphosphonsäure.

4. Verfahren zum Herstellen von Arylphenyläthern der allgemeinen Formel

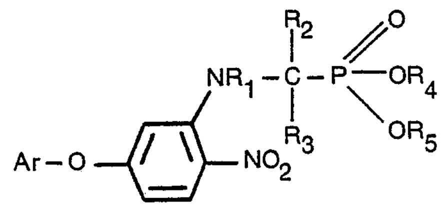

worin Ar, $R_1$, $R_2$, $R_3$, $R_4$ und $R_5$ die in Anspruch 1 angegebenen Bedeutungen haben, jedoch ohne die Maßgabe von Anspruch 1, durch Umsetzen einer Verbindung der allgemeinen Formel

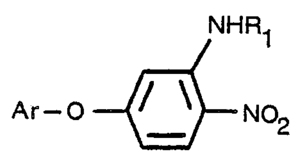

worin Ar und $R_1$ die obigen Bedeutungen haben, mit einem aliphatischen Aldehyd oder Keton der allgemeinen Formel

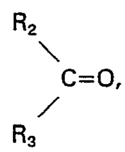

worin $R_2$ und $R_3$ die obigen Bedeutungen haben, und
mit einem Di- oder Trialkylphosphit oder einem cyclischen Phosphit der allgemeinen Formel

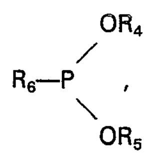

worin $R_4$ und $R_5$ die obigen Bedeutungen haben und $R_6$ ein Wasserstoffatom oder eine Alkylgruppe mit 1 bis 6 C-Atomen ist.

5. Verfahren, wie in Anspruch 4 beansprucht, zum Herstellen von Verbindungen der allgemeinen Formel

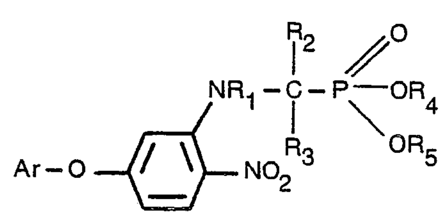

worin Ar, $R_1$, $R_2$, $R_3$, $R_4$ und $R_5$ die in Anspruch 4 angegebenen Bedeutungen haben, durch Umsetzen einer Verbindung der allgemeinen Formel

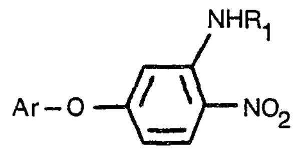

worin Ar und $R_1$ die obigen Bedeutungen haben, mit einem aliphatischen Aldehyd oder Keton der allgemeinen Formel

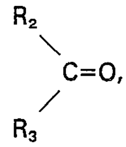

worin $R_2$ und $R_3$ die obigen Bedeutungen haben, und mit einem Di- oder Trialkylphosphit oder einem cyclischen Phosphit der allgemeinen Formel

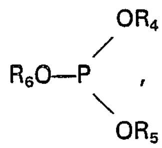

worin $R_4$ und $R_5$ die obigen Bedeutungen haben und $R_6$ ein Wasserstoffatom oder eine Alkylgruppe mit 1 bis 6 C-Atomen darstellt, in einem organischen Lösungsmittel in Anwesenheit eines katalytischen Anteils einer Lewis-Säure.

6. Herbizide Zusammensetzung, die außer einem festen oder flüssigen inerten Trägermaterial einen herbizid wirksamen Anteil eines Arylphenyläthers, wie in Anspruch 1 beansprucht, als Wirkstoff aufweist.

7. Zusammensetzung zur Blattexsikkation, die außer einem festen oder flüssigen inerten Trägermaterial einen Arylphenyläther, wie in Anspruch 1 beansprucht, als Wirkstoff in einem zur Blattexsikkation wirksamen Anteil aufweist.

8. Zusammensetzung, wie in Anspruch 6 oder 7 beansprucht, worin der Wirkstoff eine Verbindung, wie in Anspruch 2 beansprucht, ist.

9. Zusammensetzung, wie in Anspruch 6 oder 7 beansprucht, worin der Wirkstoff ausgewählt ist aus Dimethyl- und Diäthylestern von 1-[N-{2-Nitro-5-(2,4-dichlorphenoxy)-phenyl}-amino]-äthanphosphonsäure und 1-[N-{2-Nitro-5-(2-chlor-4-trifluormethylphenoxy)-phenyl}-amino]-äthanphosphonsäure.

10. Verfahren zum Herstellen einer herbiziden Zusammensetzung oder einer Zusammensetzung zur Blattexsikkation, wie in einem der Ansprüche 6 bis 9 beansprucht, welches das Mischen einer Verbindung, wie in Anspruch 1 beansprucht, mit einem festen oder flüssigen inerten Trägermaterial und, wenn gewünscht, Zusetzen anderer herbizider und/oder pestizider Verbindungen, künstlicher Düngemittel und/oder Hilfssubstanzen, wie oberflächenaktiven Mitteln und Stabilisatoren, umfaßt.

11. Verfahren zum Bekämpfen unerwünschter Pflanzen in land- und gartenwirtschaftlichen Nutzpflanzen, welches das Behandeln der Nutzpflanze oder des für die Pflanzen bestimmten Bodens mit einer Zusammensetzung, wie in einem der Ansprüche 6, 8 und 9 beansprucht, in einer Dosierung von 0,01 bis 5 kg Wirkstoff/ha, vorzugsweise 0,1 bis 3 kg/ha, umfaßt.

12. Verfahren zur Blattexsikkation in land- oder gartenwirtschaftlichen Nutzpflanzen, welches das Behandeln der Nutzpflanze mit einer Zusammensetzung, wie in einem der Ansprüche 7 bis 9 beansprucht, in einer Dosierung von 0,1 bis 5 kg Wirkstoff/ha, vorzugsweise 1 bis 5 kg/ha, umfaßt.

**Patentansprüche für die Vertragsstaaten: LU SE**

1. Ein Arylphenyläther der allgemeinen Formel

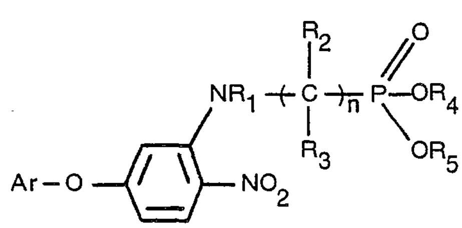

(I)

worin

Ar eine Phenyl- oder Pyridylgruppe ist, welche Gruppen mit 1, 2 oder 3 Substituenten ausgewählt aus einem Halogenatom, einer Cyanogruppe, einer Nitrogruppe, einer gegebenenfalls halogenierten Alkyl-, Alkoxy- und Alkylthiogruppe mit 1 bis 6 C-Atomen, einer Alkylsulfonylgruppe mit 1 bis 4 C-Atomen und einer Alkanoylgruppe mit 1 bis 4 C-Atomen substituiert sind;

n 1 oder 2 ist;

$R_1$ und $R_2$, die gleich oder verschieden sind, Wasserstoffatome oder Alkylgruppen mit 1 bis 4 C-Atomen darstellen;

$R_3$ ein Wasserstoffatom, eine Alkylgruppe mit 1 bis 4 C-Atomen gegebenenfalls substituiert mit einer Alkoxycarbonylgruppe mit 2 bis 5 C-Atomen oder eine Alkenylgruppe mit 2 bis 4 C-Atomen bedeuten; oder

$R_2$ und $R_3$ miteinander eine Alkylengruppe mit 2 bis 5 C-Atomen bilden; und

$R_4$ und $R_5$, die gleich oder verschieden sind, Alkylgruppen mit 1 bis 6 C-Atomen bedeuten; oder

$R_4$ und $R_5$ miteinander eine Alkylengruppe mit 2 oder 3 C-Atomen bilden.

2. Verbindung, wie in Anspruch 1 beansprucht, der allgemeinen Formel

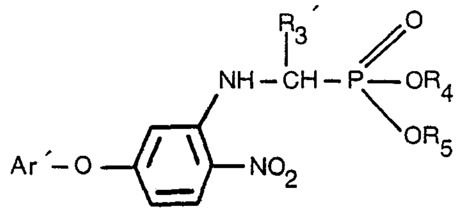

(II)

worin

Ar' eine Phenylgruppe substituiert in Stellung 2,4 oder 2,4,6 mit Substituenten ausgewählt aus einem Halogenatom, einer Nitrogruppe und einer Trifluormethylgruppe, ist, mit der Maßgabe, daß nicht mehr als einer der Substituenten eine Nitrogruppe oder eine Trifluormethylgruppe darstellt,

$R_3'$ eine Alkylgruppe mit 1 oder 2 C-Atomen oder eine Vinylgruppe bedeutet und

$R_4$ und $R_5$ die in Anspruch 1 angegebenen Bedeutungen haben.

3. Verbindung, wie in Anspruch 2 beansprucht, ausgewählt aus Dimethyl- und Diäthylestern von 1-[N-{2-Nitro-5-(2,4-dichlorphenoxy)-phenyl}-amino]-äthanphosphonsäure und 1-[N-{2-Nitro-5-(2-chlor-4-trifluormethylphenoxy)-phenyl}-amino]-äthanphosphonsäure.

4. Verfahren zum Herstellen von Arylphenyläthern der allgemeinen Formel

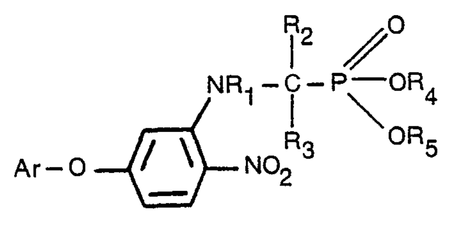

worin Ar, $R_1$, $R_2$, $R_3$, $R_4$ und $R_5$ die in Anspruch 1 angegebenen Bedeutungen haben, durch Umsetzen einer Verbindung der allgemeinen Formel

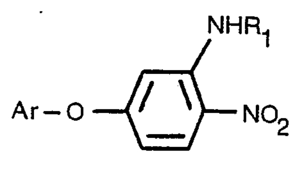

worin Ar und $R_1$ die obigen Bedeutungen haben, mit einem aliphatischen Aldehyd oder Keton der allgemeinen Formel

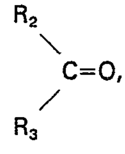

worin $R_2$ und $R_3$ die obigen Bedeutungen haben, und mit einem Di- oder Trialkylphosphit oder einem cyclischen Phosphit der allgemeinen Formel

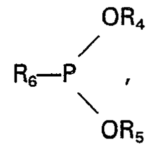

worin $R_4$ und $R_5$ die obigen Bedeutungen haben und $R_6$ ein Wasserstoffatom oder eine Alkylgruppe mit 1 bis 6 C-Atomen ist.

5. Verfahren, wie in Anspruch 4 beansprucht, zum Herstellen von Verbindungen der allgemeinen Formel

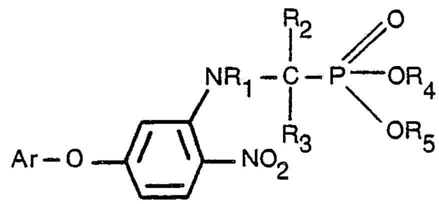

worin Ar, $R_1$, $R_2$, $R_3$, $R_4$ und $R_5$ die in Anspruch 1 angegebenen Bedeutungen haben, durch Umsetzen einer Verbindung der allgemeinen Formel

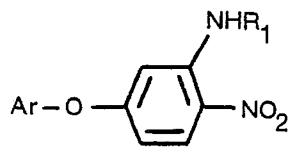

worin Ar und $R_1$ die obigen Bedeutungen haben, mit einem aliphatischen Aldehyd oder Keton der allgemeinen Formel

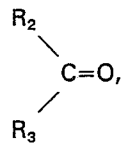

worin $R_2$ und $R_3$ die obigen Bedeutungen haben, und mit einem Di- oder Trialkylphosphit oder einem cyclischen Phosphit der allgemeinen Formel

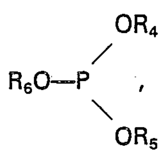

worin $R_4$ und $R_5$ die obigen Bedeutungen haben und $R_6$ ein Wasserstoffatom oder eine Alkylgruppe mit 1 bis 6 C-Atomen darstellt, in einem organischen Lösungsmittel in Anwesenheit eines katalytischen Anteils einer Lewis-Säure.

6. Verfahren zum Herstellen von Arylphenyläthern der allgemeinen Formel

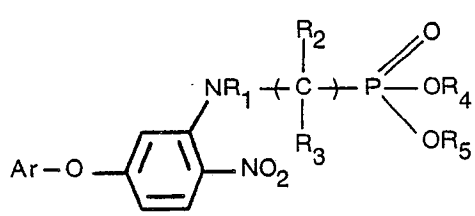

worin Ar, $R_1$, $R_2$, $R_3$, $R_4$ und $R_5$ die in Anspruch 1 angegebenen Bedeutungen haben, durch Umsetzen einer Verbindung der allgemeinen Formel

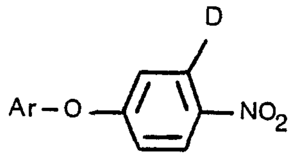

worin Ar die in Anspruch 1 angegebene Bedeutung hat, und D ein Halogenatom, eine Nitrogruppe oder eine gegebenenfalls substituierte Aryloxygruppe darstellt, mit einer Aminoverbindung der allgemeinen Formel

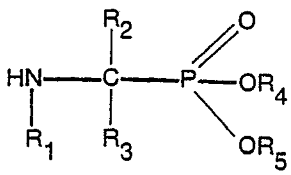 ,

worin $R_1$, $R_2$, $R_3$, $R_4$ und $R_5$ die in Anspruch 1 angegebenen Bedeutungen haben.

7. Herbizide Zusammensetzung, die außer einem festen oder flüssigen inerten Trägermaterial einen herbizid wirksamen Anteil eines Arylphenyläthers, wie in Anspruch 1 beansprucht, als Wirkstoff aufweist.

8. Zusammensetzung zur Blattexsikkation, die außer einem festen oder flüssigen inerten Trägermaterial einen Arylphenyläther, wie in Anspruch 1 beansprucht, als Wirkstoff in einem zur Blattexsikkation wirksamen Anteil aufweist.

9. Zusammensetzung, wie in Anspruch 7 oder 8 beansprucht, worin der Wirkstoff eine Verbindung, wie in Anspruch 2 beansprucht, ist.

10. Zusammensetzung, wie in Anspruch 7 oder 8 beansprucht, worin der Wirkstoff ausgewählt ist aus Dimethyl- und Diäthylestern von 1-[N-{2-Nitro-5-(2,4-dichlorphenoxy)-phenyl}-amino]-äthanphosphonsäure und 1-[N-{2-Nitro-5-(2-chlor-4-trifluormethylphenoxy)-phenyl}-amino]-äthanphosphonsäure.

11. Verfahren zum Herstellen einer herbiziden Zusammensetzung oder einer Zusammensetzung zur Blattexsikkation, wie in einem der Ansprüche 7 bis 10 beansprucht, welches das Mischen einer Verbindung, wie in Anspruch 1 beansprucht, mit einem festen oder flüssigen inerten Trägermaterial und, wenn gewünscht, Zusetzen anderer herbizider und/oder pestizider Verbindungen, künstlicher Düngemittel und/oder Hilfssubstanzen, wie oberflächenaktiven Mitteln und Stabilisatoren, umfaßt.

12. Verfahren zum Bekämpfen unerwünschter Pflanzen in land- und gartenwirtschaftlichen Nutzpflanzen, welches das Behandeln der Nutzpflanze oder des für die Pflanzen bestimmten Bodens mit einer Zusammensetzung, wie in einem der Ansprüche 7, 9 und 10 beansprucht, in einer Dosierung von 0,01 bis 5 kg Wirkstoff/ha, vorzugsweise 0,1 bis 3 kg/ha, umfaßt.

13. Verfahren zur Blattexsikkation in land- oder gartenwirtschaftlichen Nutzpflanzen, welches das Behandeln der Nutzpflanze mit einer Zusammensetzung, wie in einem der Ansprüche 8 bis 10 beansprucht, in einer Dosierung von 0,1 bis 5 kg Wirkstoff/ha, vorzugsweise 1 bis 5 kg/ha, umfaßt.

**Patentansprüche für den Vertragsstaat: AT**

1. Verfahren zum Herstellen von Arylphenyläthern der allgemeinen Formel

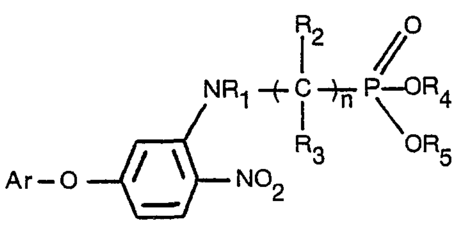 (I)

worin

Ar eine Phenyl- oder Pyridylgruppe ist, welche Gruppen mit 1, 2 oder 3 Substituenten ausgewählt aus einem Halogenatom, einer Cyanogruppe, einer Nitrogruppe, einer gegebenenfalls halogenierten Alkyl-, Alkoxy- und Alkylthiogruppe mit 1 bis 6 C-Atomen, einer Alkylsulfonylgruppe mit 1 bis 4 C-Atomen und einer Alkanoylgruppe mit 1 bis 4 C-Atomen substituiert sind;

n 1 oder 2 ist;

$R_1$ und $R_2$, die gleich oder verschieden sind, Wasserstoffatome oder Alkylgruppen mit 1 bis 4 C-Atomen darstellen;

$R_3$ ein Wasserstoffatom, eine Alkylgruppe mit 1 bis 4 C-Atomen gegebenenfalls substituiert mit einer Alkoxycarbonylgruppe mit 2 bis 5 C-Atomen oder eine Alkenylgruppe mit 2 bis 4 C-Atomen bedeuten; oder

$R_2$ und $R_3$ miteinander eine Alkylengruppe mit 2 bis 5 C-Atomen bilden; und
$R_4$ und $R_5$, die gleich oder verschieden sind, Alkylgruppen mit 1 bis 6 C-Atomen bedeuten; oder
$R_4$ und $R_5$ miteinander eine Alkylengruppe mit 2 oder 3 C-Atomen bilden;
durch Umsetzen einer Verbindung der allgemeinen Formel

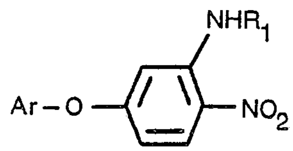

worin Ar und $R_1$ die obigen Bedeutungen haben, mit einem aliphatischen Aldehyd oder Keton der allgemeinen Formel

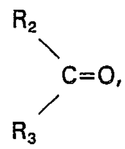

worin $R_2$ und $R_3$ die obigen Bedeutungen haben, und
mit einem Di- oder Trialkylphosphit oder einem cyclischen Phosphit der allgemeinen Formel

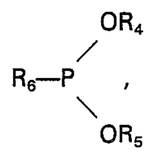

worin $R_4$ und $R_5$ die obigen Bedeutungen haben und $R_6$ ein Wasserstoffatom oder eine Alkylgruppe mit 1 bis 6 C-Atomen ist.

2. Verfahren, wie in Anspruch 1 beansprucht, zum Herstellen von Verbindungen der allgemeinen Formel

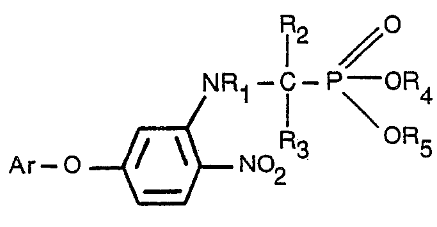

worin Ar, $R_1$, $R_2$, $R_3$, $R_4$ und $R_5$ die in Anspruch 4 angegebenen Bedeutungen haben, durch Umsetzen einer Verbindung der allgemeinen Formel

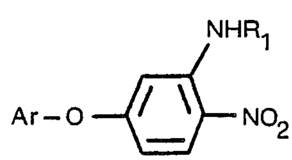

worin Ar und $R_1$ die obigen Bedeutungen haben, mit einem aliphatischen Aldehyd oder Keton der allgemeinen Formel

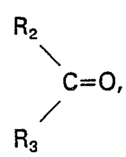

worin $R_2$ und $R_3$ die obigen Bedeutungen haben, und mit einem Di- oder Trialkylphosphit oder einem cyclischen Phosphit der allgemeinen Formel

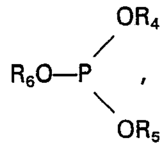

worin $R_4$ und $R_5$ die obigen Bedeutungen haben und $R_6$ ein Wasserstoffatom oder eine Alkylgruppe mit 1 bis 6 C-Atomen darstellt, in einem organischen Lösungsmittel in Anwesenheit eines katalytischen Anteils einer Lewis-Säure.

3. Herbizide Zusammensetzung, die außer einem festen oder flüssigen inerten Trägermaterial einen herbizid wirksamen Anteil eines Arylphenyläthers der allgemeinen Formel

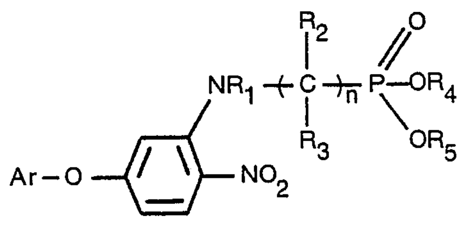
(I)

worin Ar, $R_1$, $R_2$, $R_3$, $R_4$ und $R_5$ die in Anspruch 1 angegebenen Bedeutungen haben und n 1 oder 2 ist, mit der Maßgabe, daß, wenn n 2 ist oder $R_1$ $C_1$—$C_4$-Alkyl darstellt, Ar keine Phenyl- oder Pyridylgruppe substituiert mit 1 bis 3 Substituenten ausgewählt aus Halogen, Cyano, Nitro und Trifluormethyl ist, als Wirkstoff aufweist.

4. Zusammensetzung zur Blattexsikkation, die außer einem festen oder flüssigen inerten Trägermaterial einen Arylphenyläther der allgemeinen Formel (I), worin die Symbole die in Anspruch 3 angegebenen Bedeutungen haben, als Wirkstoff in einem für die Blattexsikkation wirksamen Anteil aufweist.

5. Zusammensetzung, wie in Anspruch 3 oder 4 beansprucht, worin der Wirkstoff eine Verbindung der allgemeinen Formel

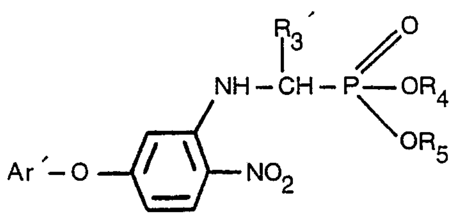
(II)

ist, worin

Ar' eine Phenylgruppe substituiert in Stellung 2,4 oder 2,4,6 mit Substituenten ausgewählt aus einem Halogenatom, einer Nitrogruppe und einer Trifluormethylgruppe, ist, mit der Maßgabe, daß nicht mehr als einer der Substituenten eine Nitrogruppe oder eine Trifluormethylgruppe darstellt,

$R_3$' eine Alkylgruppe mit 1 oder 2 C-Atomen oder eine Vinylgruppe bedeutet und

$R_4$ und $R_5$ die in Anspruch 1 angegebenen Bedeutungen haben.

6. Zusammensetzung, wie in Anspruch 3 oder 4 beansprucht, worin der Wirkstoff ausgewählt ist aus Dimethyl- und Diäthyl-estern von 1-[N-{2-Nitro-5-(2,4-dichlorphenoxy)-phenyl}-amino]-äthanphosphonsäure und von 1-[N-{2-Nitro-5-(2-chlor-4-trifluormethylphenoxy)-phenyl}-amino]-äthanphosphonsäure.

7. Verfahren zum Herstellen einer herbiziden Zusammensetzung oder einer Zusammensetzung zur Blattexsikkation, wie in einem der Ansprüche 3 bis 6 beansprucht, welches das Mischen einer Verbindung der allgemeinen Formel (I), worin die Symbole wie in Anspruch 3 definiert sind, mit einem festen oder flüssigen inerten Trägermaterial und, wenn gewünscht, Zusetzen anderer herbizider und/oder pestizider Verbindungen, künstlicher Düngemittel und/oder Hilfssubstanzen, wie oberflächenaktive Mittel und Stabilisatoren, umfaßt.

8. Verfahren zum Bekämpfen unerwünschter Pflanzen in land- und gartenwirtschaftlichen Nutzpflanzen, welches das Behandeln der Nutzpflanze oder des für die Pflanzen bestimmten Bodens mit einer Zusammensetzung, wie in einem der Ansprüche 3, 5 und 6 beansprucht, in einer Dosierung von 0,01 bis 5 kg Wirkstoff/ha, vorzugsweise 0,1 bis 3 kg/ha, umfaßt.

9. Verfahren zur Blattexsikkation in land- oder gartenwirtschaftlichen Nutzpflanzen, welches das Behandeln der Nutzpflanze mit einer Zusammensetzung, wie in einem der Ansprüche 4 bis 6 beansprucht, in einer Dosierung von 0,1 bis 5 kg Wirkstoff/ha, vorzugsweise 1 bis 5 kg/ha, umfaßt.

**Revendications pour les Etats contractants: BE CH DE FR GB IT LI NL**

1. Ether d'aryle et de phényle de formule générale:

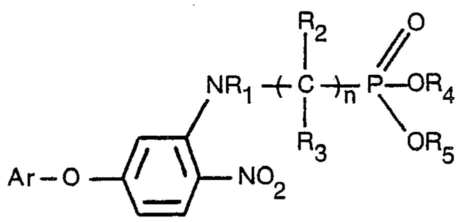

(I)

dans laquelle

Ar est un groupe phényle ou pyridyle, ces groupes étant substitués par 1, 2 ou 3 substituants, choisis parmi un atome d'halogène, un groupe cyano, un groupe nitro, un groupe alkyle alcoxy et alkylthio ayant 1 à 6 atomes de carbone éventuellement halogénés, un groupe alkylsulfonyle ayant 1 à 4 atomes de carbone, et un groupe alcanoyle ayant 1 à 4 atomes de carbone;

n vaut 1 ou 2;

$R_1$ et $R_2$, qui sont identiques ou différents, représentent des atomes d'hydrogène ou des groupes alkyles ayant 1 à 4 atomes de carbone;

$R_3$ est un atome d'hydrogène, un groupe alkyle ayant 1 à 4 atomes de carbone, éventuellement substitués par un groupe alcoxycarbonyle ayant 2 à 5 atomes de carbone, ou est un groupe alcényle ayant 2 à 4 atomes de carbone; ou

$R_2$ et $R_3$ forment ensemble un groupe alkylène ayant 2 à 5 atomes de carbone; et

$R_4$ et $R_5$, qui sont identiques ou différents, représentent des groupes alkyles ayant 1 à 6 atomes de carbone; ou

$R_4$ et $R_5$ forment ensemble un groupe alkylène ayant 2 ou 3 atomes de carbone;

à la condition que, si n vaut 2 ou si $R_1$ représente un groupe alkyle en $C_1$ à $C_4$, Ar ne représente pas un groupe phényle ou pyridyle substitué par 1 à 3 substituant(s) choisi(s) parmi un atome d'halogène, un groupe cyano, nitro et trifluorométhyle.

2. Composé selon la revendication 1, de formule générale:

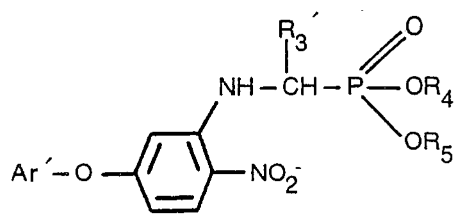

(II)

dans laquelle

Ar' représente un groupe phényle, substitué sur les positions 2,4 ou 2,4,6 par des substituants choisis parmi un atome d'halogène, un groupe nitro et un groupe trifluorométhyle, à condition que pas plus d'un des substituants ne représente un groupe nitro ou un groupe fluorométhyle,

$R_3'$ représente un groupe alkyle ayant 1 ou 2 atomes de carbone, ou un groupe vinyle, et

$R_4$ et $R_5$ ont les sens indiqués à la revendication 1.

3. Composé selon la revendication 2, choisi parmi les esters de diméthyle et diéthyle de l'acide 1-[N-{2-nitro-5-(2,4-dichlorophénoxy)-phényl}amino]éthane phosphonique et de l'acide 1-[N-{2-nitro-5-(2-chloro-4-trifluorométhylphénoxy)phényl}amino]éthane phosphonique.

4. Procédé pour préparer des éthers d'aryle et de phényle de formule générale:

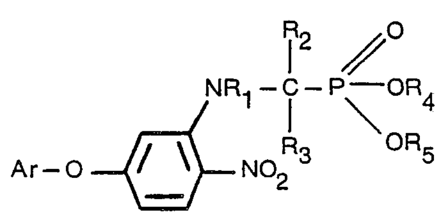

dans laquelle Ar, $R_1$, $R_2$, $R_3$, $R_4$ et $R_5$ ont les sens indiqués à la revendication 1, mais sans la condition énoncée à la revendication 1, par réaction d'un composé de formule générale:

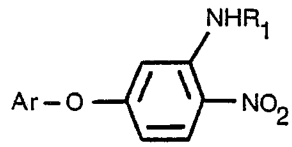

dans laquelle Ar et $R_1$ ont les sens ci-dessus, avec un aldéhyde ou une cétone aliphatique de formule générale:

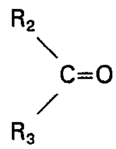

dans laquelle $R_2$ et $R_3$ ont les sens ci-dessus, et avec un phosphite de di- ou trialkyle ou avec un phosphite cyclique de formule générale:

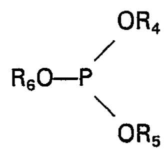

dans laquelle $R_4$ et $R_5$ ont les sens ci-dessus, et $R_6$ est un atome d'hydrogène ou un groupe alkyle ayant 1 à 6 atomes de carbone.

5. Procédé selon la revendication 4, pour préparer des composés de formule générale:

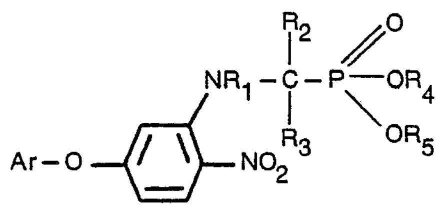

dans laquelle Ar, $R_1$, $R_2$, $R_3$, $R_4$ et $R_5$ ont les sens indiqués à la revendication 4, par réaction d'un composé de formule générale:

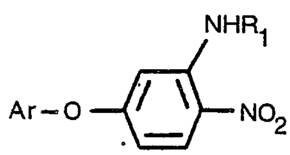

dans laquelle Ar et $R_1$ ont les sens indiqués ci-dessus, avec un aldéhyde ou une cétone aliphatique de formule générale:

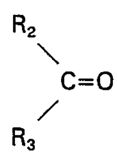

dans laquelle $R_2$ et $R_3$ ont les sens ci-dessus, et avec un phosphite de di- ou trialkyle ou un phosphite cyclique de formule générale:

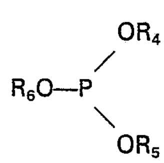

dans laquelle $R_4$ et $R_5$ ont les sens ci-dessus, et $R_6$ est un atome d'hydrogène ou un groupe alkyle ayant 1 à 6 atomes de carbone,

dans un solvant organique inerte en présence d'une quantité catalytique d'un acide de Lewis.

6. Composition herbicide comprenant, en plus d'une matière solide ou liquide formant véhicule inerte, une quantité à efficacité herbicide d'un éther d'aryle et de phényle selon la revendication 1, à titre de substance active.

7. Composition pour la dessication des feuilles comprenant, en plus d'une matière solide ou liquide comme véhicule inerte, un éther d'aryle et de phényle selon la revendication 1, à titre de substance active, présente en une quantité efficace pour la dessication de feuilles.

8. Composition selon la revendication 6 ou 7, dans laquelle la substance active est un composé tel que revendiqué à la revendication 2.

9. Composition selon la revendication 6 ou 7, dans laquelle la substance active est choisie parmi les esters de diméthyle et de diéthyle de l'acide 1-[N-{2-nitro-5-(2,4-dichlorophénoxy)phényl}amino]éthane phosphonique et de l'acide 1-[N-{2-nitro-5-(2-chloro-4-trifluorométhylphénoxy)phényl}-amino]éthane phosphonique.

10. Procédé pour préparer une composition herbicide ou pour la dessication des feuilles selon une quelconque des revendications 6 à 9, comprenant l'opération de mélanger un composé tel que revendiqué à la revendication 1 avec une matière solide ou liquide comme véhicule inerte, et, si on le désire, l'addition d'autres composés herbicides et/ou pesticides, des engrais artificiels et/ou des substances auxiliaires comme des substances tensio-actives et des stabilisants.

11. Procédé pour maîtriser des plantes non souhaitées en agriculture ou en horticulture, comprenant le traitement de la culture ou de la terre destinée aux plantes par une composition selon l'une quelconque des revendications 6, 8 et 9 en une dose de 0,01 à 5 kg de la substance active par hectare, de préférence de 0,1 à 3 kg par hectare.

12. Procédé de dessication de feuilles en agriculture ou horticulture, comprenant le traitement de la culture par une composition selon l'une quelconque des revendications 7 à 9, en une dose de 0,1 à 5 kg de la substance active par hectare, de préférence de 1 à 5 kg par hectare.

**Revendications pour les Etats contractants: LU SE**

1. Ether d'aryle et de phényle de formule générale:

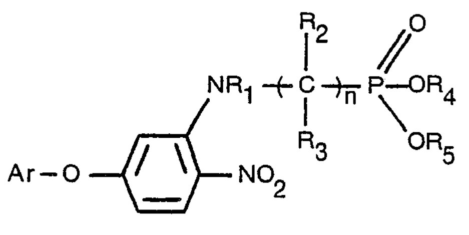

(I)

dans laquelle

Ar est un groupe phényle ou pyridyle, ces groupes étant substitués par 1, 2 ou 3 substituants, choisis parmi un atome d'halogène, un groupe cyano, un groupe nitro, un groupe alkyle alcoxy et alkylthio ayant 1 à 6 atomes de carbone éventuellement halogénés, un groupe alkylsulfonyle ayant 1 à 4 atomes de carbone, et un groupe alcanoyle ayant 1 à 4 atomes de carbone;

n vaut 1 ou 2;

$R_1$ et $R_2$, qui sont identiques ou différents, représentent des atomes d'hydrogène ou des groupes alkyles ayant 1 à 4 atomes de carbone;

$R_3$ est un atome d'hydrogène, un groupe alkyle ayant 1 à 4 atomes de carbone, éventuellement substitués par un groupe alcoxycarbonyle ayant 2 à 5 atomes de carbone, ou est un groupe alcényle ayant 2 à 4 atomes de carbone; ou

$R_2$ et $R_3$ forment ensemble un groupe alkylène ayant 2 à 5 atomes de carbone; et

$R_4$ et $R_5$, qui sont identiques ou différents, représentent des groupes alkyles ayant 1 à 6 atomes de carbone; ou

$R_4$ et $R_5$ forment ensemble un groupe alkylène ayant 2 ou 3 atomes de carbone.

2. Composé selon la revendication 1, de formule générale:

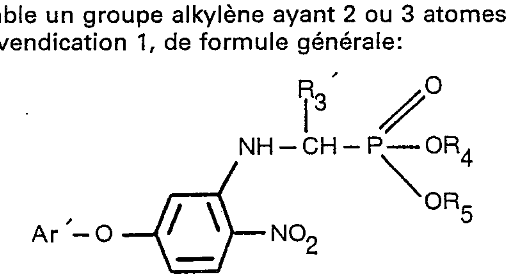

(II)

dans laquelle

Ar' représente un groupe phényle, substitué sur les positions 2,4 ou 2,4,6 par des substituants choisis parmi un atome d'halogène, un groupe nitro et un groupe trifluorométhyle, à condition que pas plus d'un des substituants ne représente un groupe nitro ou un groupe trifluorométhyle,

$R_3'$ représente un groupe alkyle ayant 1 ou 2 atomes de carbone, ou un groupe vinyle, et

$R_4$ et $R_5$ ont les sens indiqués à la revendication 1.

3. Composé selon la revendication 2, choisi parmi les esters de diméthyle et diéthyle de l'acide 1-[N-{2-nitro-5-(2,4-dichlorophénoxy)-phényl}amino]éthane phosphonique et de l'acide 1-[N-{2-nitro-5-(2-chloro-4-trifluorométhylphénoxy)phényl}amino]éthane phosphonique.

4. Procédé pour préparer des éthers d'aryle et de phényle de formule générale:

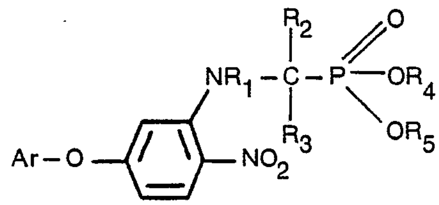

dans laquelle Ar, $R_1$, $R_2$, $R_3$, $R_4$ et $R_5$ ont les sens indiqués à la revendication 1, par réaction d'un composé de formule générale:

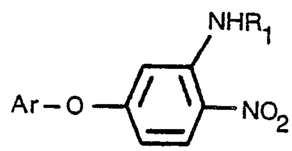

dans laquelle Ar et $R_1$ ont les sens ci-dessus, avec un aldéhyde ou une cétone aliphatique de formule générale:

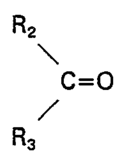

dans laquelle $R_2$ et $R_3$ ont les sens ci-dessus, et avec un phosphite de di- ou trialkyle ou avec un phosphite cyclique de formule générale:

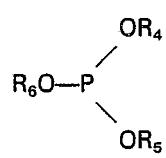

dans laquelle $R_4$ et $R_5$ ont les sens ci-dessus, et $R_6$ est un atome d'hydrogène ou un groupe alkyle ayant 1 à 6 atomes de carbone.

5. Procédé selon la revendication 4, pour préparer des composés de formule générale:

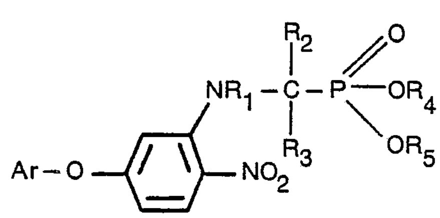

dans laquelle Ar, $R_1$, $R_2$, $R_3$, $R_4$ et $R_5$ ont les sens indiqués à la revendication 1, par réaction d'un composé de formule générale:

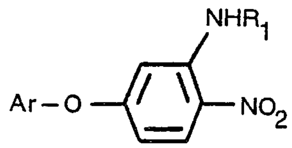

dans laquelle Ar et $R_1$ ont les sens ci-dessus, avec un aldéhyde ou une cétone aliphatique de formule générale:

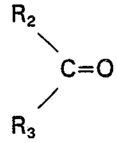

dans laquelle $R_2$ et $R_3$ ont les sens ci-dessus, et avec un phosphite de di- ou trialkyle ou un phosphite cyclique de formule générale:

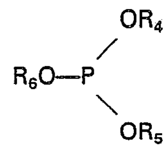

dans laquelle $R_4$ et $R_5$ ont les sens ci-dessus, et $R_6$ est un atome d'hydrogène ou un groupe alkyle ayant 1 à 6 atomes de carbone,
dans un solvant organique inerte en présence d'une quantité catalytique d'un acide de Lewis.

6. Procédé pour préparer des éthers d'aryle et de phényle, de formule générale:

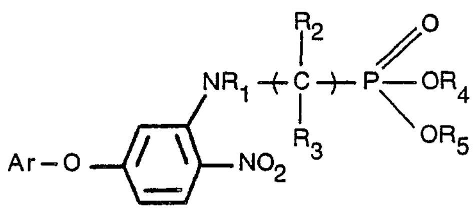

dans laquelle Ar, $R_1$, $R_2$, $R_3$, $R_4$ et $R_5$ ont les sens indiqués à la revendication 1, par réaction d'un composé de formule générale:

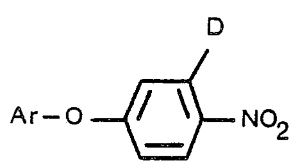

dans laquelle Ar a le sens indiqué à la revendication 1, et D est un atome d'halogène, un groupe nitro ou un groupe aryloxy éventuellement substitué, avec une amine de formule générale:

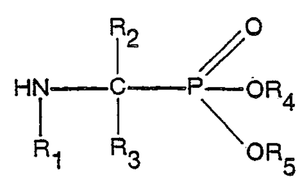

dans laquelle $R_1$, $R_2$, $R_3$, $R_4$ et $R_5$ ont les sens indiqués à la revendication 1.

7. Composition herbicide, comprenant, en plus d'une matière solide ou liquide formant véhicule inerte, une quantité à efficacité herbicide d'un éther d'aryle et de phényle selon la revendication 1, à titre de substance active.

8. Composition pour la dessication des feuilles comprenant, en plus d'une matière liquide ou solide comme véhicule inerte, un éther d'aryle et de phényle, tel que revendiqué à la revendication 1, comme substance active présente en une quantité efficace pour la dessication des feuilles.

9. Composition selon la revendication 7 ou 8, dans laquelle la substance active est un composé selon la revendication 2.

10. Composition selon la revendication 7 ou 8, dans laquelle la substance active est choisie parmi les esters de diméthyle et de diéthyle de l'acide 1-[N-{2-nitro-5-(2,4-dichlorophénoxy)phényl}amino]éthane phosphonique et de l'acide 1-[N-{2-nitro-5(2-chloro-4-trifluorométhylphénoxy)phényl}-amino]éthane phosphonique.

11. Procédé pour préparer une composition herbicide ou une composition pour la dessication des feuilles selon une quelconque des revendications 7 à 10, comprenant l'opération de mélanger un composé selon la revendication 1 avec une matière solide ou liquide comme véhicule inerte et, si on le désire, l'addition d'autres composés herbicides et/ou pesticides, des engrais artificiels et/ou des substances auxiliaires comme des substances tensio-actives et des stabilisants.

12. Procédé pour maîtriser les plantes non souhaitées en agriculture ou en horticulture, comprenant le traitement de la culture ou de la terre destinée aux plantes par une composition selon l'une quelconque des revendications 7, 9 et 10 en une dose de 0,01 à 5 kg de substance active par hectare, de préférence de 0,1 à 3 kg par hectare.

13. Procédé de dessication de feuilles en agriculture ou horticulture, comprenant le traitement de la culture par une composition telle que revendiqué dans l'une quelconque des revendications 8 à 10, en une dose de 0,1 à 5 kg de la substance active par hectare, de préférence de 1 à 5 kg par hectare.

**Revendications pour l'Etat contractant: AT**

1. Procédé pour préparer les éthers d'aryle et de phényle, de formule générale:

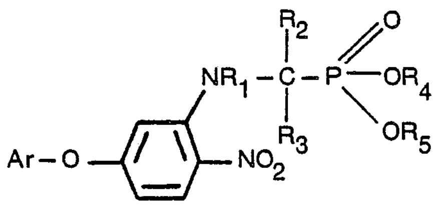

(I)

dans laquelle

Ar est un groupe phényle ou pyridyle, ces groupes étant substitués par 1, 2 ou 3 substituants, choisis parmi un atome d'halogène, un groupe cyano, un groupe nitro, un groupe alkyle alcoxy et alkylthio ayant 1 à 6 atomes de carbone éventuellement halogénés, un groupe alkylsulfonyle ayant 1 à 4 atomes de carbone, et un groupe alcanoyle ayant 1 à 4 atomes de carbone;

n vaut 1 ou 2;

$R_1$ et $R_2$, qui sont identiques ou différents, représentent des atomes d'hydrogène ou des groupes alkyles ayant 1 à 4 atomes de carbone;

$R_3$ est un atome d'hydrogène, un groupe alkyle ayant 1 à 4 atomes de carbone, éventuellement substitués par un groupe alcoxycarbonyle ayant 2 à 5 atomes de carbone, ou est un groupe alcényle ayant 2 à 4 atomes de carbone; ou

$R_2$ et $R_3$ forment ensemble un groupe alkylène ayant 2 à 5 atomes de carbone; et

$R_4$ et $R_5$, qui sont identiques ou différents, représentent des groupes alkyles ayant 1 à 6 atomes de carbone; ou

$R_4$ et $R_5$ forment ensemble un groupe alkylène ayant 2 ou 3 atomes de carbone;

par la réaction d'un composé de formule générale:

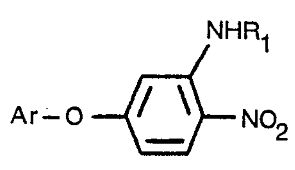

dans laquelle Ar et $R_1$ ont les sens ci-dessus, avec un aldéhyde ou une cétone aliphatique de formule générale:

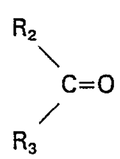

dans laquelle $R_2$ et $R_3$ ont les sens ci-dessus, et avec un phosphite de di- ou de trialkyle ou un phosphite cyclique de formule générale:

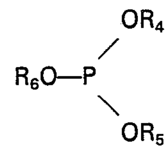

dans laquelle $R_4$ et $R_5$ ont les sens ci-dessus, et $R_6$ est un atome d'hydrogène ou un groupe alkyle ayant 1 à 6 atomes de carbone.

2. Procédé selon la revendication 4, pour préparer des composés de formule générale:

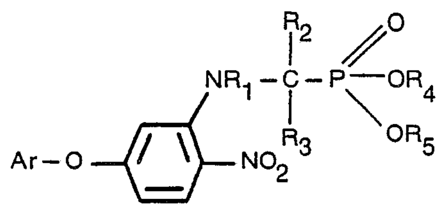

dans laquelle Ar, $R_1$, $R_2$, $R_3$, $R_4$ et $R_5$ ont les sens indiqués à la revendication 1, par réaction d'un composé de formule générale:

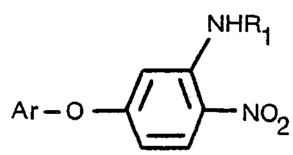

dans laquelle Ar et $R_1$ ont les sens ci-dessus, avec un aldéhyde ou une cétone aliphatique de formule générale:

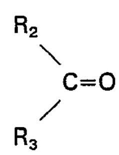

dans laquelle $R_2$ et $R_3$ ont les sens ci-dessus, et avec un phosphite de di- ou trialkyle ou un phosphite cyclique de formule générale:

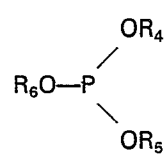

dans laquelle $R_4$ et $R_5$ ont les sens ci-dessus, et $R_6$ est un atome d'hydrogène ou un groupe alkyle ayant 1 à 6 atomes de carbone, dans un solvant organique inerte en présence de la quantité catalytique d'un acide de Lewis.

3. Composition herbicide comprenant, en une matière solide ou liquide comme véhicule inerte, une quantité, efficace du point de vue herbicide, d'un éther d'aryle et de phényle de formule générale:

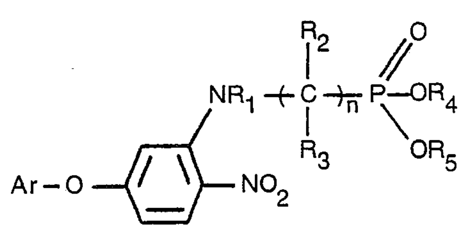

(I)

dans laquelle Ar, $R_1$, $R_2$, $R_3$, $R_4$ et $R_5$ ont les sens indiqués à la revendication 1, et n vaut 1 ou 2, à la condition que, si n vaut 2 ou $R_1$ représente un groupe alkyle en $C_1$ à $C_4$, Ar ne représente pas un groupe phényle ou pyridyle substitué par 1 à 3 substituants, choisi(s) parmi un atome d'halogène, un groupe cyano, nitro et trifluorométhyle, comme substance active.

4. Composition pour la dessication des feuilles comprenant, en plus d'une matière liquide ou solide comme véhicule inerte, un éther d'aryle et de phényle de formule générale I, dans laquelle les symboles ont les sens indiqués à la revendication 3, comme substance active présente en une quantité efficace pour la dessication des feuilles.

5. Composition selon la revendication 3 ou 4, dans laquelle la substance active est un composé de formule générale:

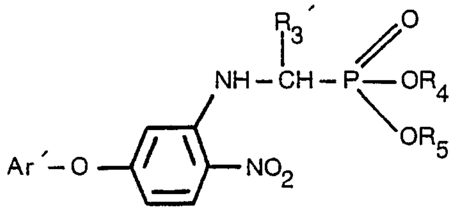

(II)

dans laquelle

Ar' est un groupe phényle, substitué sur les positions 2,4 ou 2,4,6 par des substituants choisis parmi un atome d'halogène, un groupe nitro et un groupe trifluorométhyle, à la condition que pas plus d'un des substituants ne représente un groupe nitro ou un groupe trifluorométhyle,

$R_3$' est un groupe alkyle ayant 1 ou 2 atomes de carbone, ou un groupe vinyle, et

$R_4$ et $R_5$ ont les sens indiqués à la revendication 1.

6. Composition selon la revendication 3 ou 4, dans laquelle la substance active est choisie parmi les esters de diméthyle et de diéthyle de l'acide 1-[N-{2-nitrop-5--(2,4-dichlorophénoxy)-phényl}amino]éthane phosphonique et de l'acide 1-[N-{2-chloro-4-trifluorométhylphénoxy)phényl}amino]éthane phosphonique.

7. Procédé pour préparer une composition herbicide ou une composition pour la dessication des feuilles selon l'une quelconque des revendications 3 à 6, comprenant l'opération de mélanger un composé de formule générale I, dans laquelle les symboles sont tels que ééfinis à la revendication 3, avec une matière solide ou liquide comme véhicule inerte et, si on le désire, l'addition d'autres composés herbicides et/ou pesticides, les engrais artificiels et/ou les substances auxiliaires comme des substances tensio-actives et des stabilisants.

8. Procédé pour maîtriser les plantes non souhaitées en agriculture ou en horticulture, comprenant le traitement de la culture ou de la terre destinée aux plantes par une composition selon l'une quelconque des revendications 3, 5 et 6 en une dose de 0,01 à 5 kg de la substance active par hectare, de préférence de 0,1 à 3 kg par hectare.

9. Procédé de dessication de feuilles en agriculture ou horticulture, comprenant le traitement de la culture par une composition selon l'une quelconque des revendications 4 à 6, en une dose de 0,1 à 5 kg de la substance active par hectare, de préférence de 1 à 5 kg par hectare.